(19) Europäisches Patentamt
European Patent Office
Office européen des brevets

(11) EP 0 920 389 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **98928110.0**

(22) Anmeldetag: **02.04.1998**

(51) Int Cl.[7]: **B60T 8/00**, B60T 13/66, B62D 6/04

(86) Internationale Anmeldenummer:
**PCT/DE1998/000928**

(87) Internationale Veröffentlichungsnummer:
**WO 1999/001320 (14.01.1999 Gazette 1999/02)**

(54) **VERFAHREN UND VORRICHTUNG ZUR REGELUNG VON DIE FAHRZEUGBEWEGUNG REPRÄSENTIERENDEN BEWEGUNGSGRÖSSEN**

METHOD AND DEVICE FOR REGULATING MOTION QUANTITIES REPRESENTING THE MOVEMENT OF A VEHICLE

PROCEDE ET DISPOSITIF POUR LE REGLAGE DE GRANDEURS REPRESENTATIVES DU MOUVEMENT D'UN VEHICULE

(84) Benannte Vertragsstaaten:
**DE FR GB**

(30) Priorität: **30.06.1997 DE 19727559**
**06.11.1997 DE 19749005**

(43) Veröffentlichungstag der Anmeldung:
**09.06.1999 Patentblatt 1999/23**

(73) Patentinhaber: **ROBERT BOSCH GMBH**
**70442 Stuttgart (DE)**

(72) Erfinder:
- **REIMANN, Gerd**
  **D-74232 Abstatt (DE)**
- **VOLKART, Asmus**
  **D-74321 Bietigheim-Bissingen (DE)**
- **SCHUBERT, Michael**
  **D-75382 Althengstett (DE)**
- **KRAEMER, Wolfgang**
  **D-70191 Stuttgart (DE)**

(56) Entgegenhaltungen:
**EP-A- 0 473 112**
**EP-A- 0 487 967**
**DE-A- 4 030 704**
**DE-A- 4 140 239**
**DE-A- 4 216 301**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 920 389 B1

## Beschreibung

Stand der Technik

Die Erfindung betrifft ein Verfahren und eine Vorrichtung zur Regelung von die Fahrzeugbewegung repräsentierenden Bewegungsgrößen.

Verfahren und Vorrichtungen zur Regelung von die Fahrzeugbewegung repräsentierenden Bewegungsgrößen sind aus dem Stand der Technik in vielerlei Modifikationen bekannt.

Aus der DE 43 05 155 A1 (entspricht der US 5,455,770) ist ein Fahrdynamikregelsystem bekannt, welches einen übergeordneten Fahrdynamikrechner aufweist. Dem Fahrdynamikrechner ist jeweils ein Bremsenregler und ein Hinterachslenkungsregler unterlagert. Der unterlagerte Bremsenregler besteht aus einem Gierwinkelgeschwindigkeitsregler und aus einem Schwimmwinkelregler. Der unterlagerte Hinterachslenkregler besteht aus einem Gierwinkelgeschwindigkeitsregler und aus einem Schwimmwinkelbegrenzer. Beide Regler, der Bremsenregler und der Hinterachslenkregler können parallel arbeiten.

Mit Hilfe einer Meßdatenerfassung werden verschiedene Größen erfaßt, wie beispielsweise die Giergeschwindigkeit, der Schwimmwinkel, die Radgeschwindigkeiten, die Lenkwinkel für Vorder- und Hinterachse, die Fahrzeuglängsgeschwindigkeit bzw. die Fahrzeugquergeschwindigkeit sowie die Fahrzeuglängsbeschleunigung bzw. die Fahrzeugquerbeschleunigung. Die mit der Meßdatenerfassung erfaßten Daten stehen dem Fahrdynamikrechner, dem unterlagerten Bremsenregler sowie dem unterlagerten Hinterachslenkungsregler zur Verfügung. Aufgrund der Fahrsituation, die durch die mit Hilfe der Meßdatenerfassung erfaßten Daten beschrieben wird, gibt der Fahrdynamikrechner dem Bremsenregler einen Sollwert für die Giergeschwindigkeit und einen Grenzwert für den Schwimmwinkel vor. Gleichzeitig teilt der Fahrdynamikrechner dem Bremsenregler den Regelmodus mit, d.h. ob eine Gierwinkelgeschwindigkeitsregelung oder eine Schwimmwinkelregelung ausgeführt werden soll. In Abhängigkeit dieser Vorgaben erzeugt der Bremsenregler Stelleingriffe für einen ihm unterlagerten Radregler, der in Abhängigkeit dieser Stellsignale Ventilöffnungszeiten ermittelt, die von einer entsprechenden Hydraulik in Radbremsdruckänderungen umgesetzt werden. Entsprechend den Vorgaben für den Bremsenregler gibt der Fahrdynamikrechner auch dem Hinterachslenkungsregler einen Sollwert für die Giergeschwindigkeit und einen Grenzwert für den Schwimmwinkel vor. Ferner teilt der Fahrdynamikrechner dem Hinterachslenkungsregler mit, welcher der beiden in ihm implementierten Regler wirksam sein soll. Die beiden im Hinterachslenküngsregler enthaltenen Regler erzeugen den Hinterachslenkwinkel kennzeichnende Signale, die von einer entsprechenden Hydraulik umgesetzt werden.

Aus der DE-OS 40 31 316 (entspricht der US 5,205,371) ist ein Lenksystem bekannt und soll, soweit es zum Verständnis der vorliegenden Erfindung relevant ist, erläutert werden. Bei einem solchen Lenksystem werden die vom Fahrer durch das Lenkrad aufgebrachten Lenkbewegungen, der durch einen Sensor erfaßte Lenkradwinkel $\delta_L$, in einem Überlagerungsgetriebe mit den Bewegungen, dem Motorwinkel $\delta_M$, eines Stellantriebes überlagert. Die so entstandene überlagerte Bewegung $\delta_L'$ wird über das Lenkgetriebe bzw. das Lenkgestänge an die lenkbar ausgelegten Vorderräder zur Einstellung des Lenkwinkels $\delta_V$ weitergeleitet. Hierbei kann der Stellantrieb als Elektromotor ausgelegt sein. Das Funktionsprinzip eines solchen Servolenksystems besteht darin, daß die Lenkung durch die Übersetzung $i_ü$ des Überlagerungsgetriebes sehr indirekt gemacht werden kann und damit geringe Lenkradmomente $M_L$ erreicht werden können. Dadurch bedingte, sehr große Lenkradwinkel $\delta_L$ werden vermieden, indem geeignete Motorwinkel $\delta_M$ überlagert werden, so daß entsprechend dem Zusammenhang

$$\delta_L' = \delta_L / i_ü + \delta_M$$

mit Lenkradwinkeln üblicher Größe erforderliche Ausgangswinkel $\delta_L'$ eingestellt werden können. Der zur Lenkunterstützung erforderliche Motorwinkel $\delta_M$ bzw. sein Sollwert wird aus dem Lenkradwinkel $\delta_L$ bestimmt. Der Motorwinkel $\delta_M$ ist abhängig von Signalen, die die Fahrzeugbewegungen repräsentieren.

Aus der DE 44 46 582 A1 ist ein Regelsystem bekannt, welches einen übergeordneten und einen untergeordneten Regler enthält. Der übergeordnete Regler erzeugt Signale zur Beeinflussung von Aktuatoren. Dabei handelt es sich um Aktuatoren zur Aufbringung von Bremskräften an den Rädern. Ausgehend von den Raddrehzahlen werden im unterlagerten Regler zur Ansteuerung der Aktuatoren, mit denen eine Bremskraft an den Rädern aufbringbar ist, Ansteuersignale gebildet. Die Signale zur Beeinflussung der Aktuatoren werden mit Hilfe des übergeordneten Reglers so gebildet, daß die Regelgröße des übergeordneten Reglers auf einen innerhalb zweier Grenzwerte liegenden Sollbereich geregelt wird. Eine Beeinflussung der Aktuatoren durch den überlagerten Regler findet nur statt, wenn die Regelgröße des überlagerten Reglers außerhalb des Sollbereichs liegt oder diesen verläßt.

Systeme zur Regelung der Fahrdynamik eines Fahrzeuges sind beispielsweise aus der in der Automobiltechnischen Zeitschrift (ATZ) 96, 1994, Heft 11, auf den Seiten 674 bis 689 erschienenen Veröffentlichung "FDR - die Fahrdynamikregelung von Bosch" bekannt.

Aus der DE 41 40 239 A 1 sind ein Verfahren und eine Vorrichtung zur Erzeugung eines für die Querbewegung eines Fahrzeugs repräsentativen Signals bekannt. Dabei werden Signale, die die Drehzahldifferenz wenigstens zweier Räder wenigstens einer Achse repräsentieren und Signale, die die Fahrzeuggeschwindigkeit repräsentieren, durch ein nichtlineares Kennfeld verknüpft. Somit gelangt man zu Signalen, die die Querbewegungen, insbesondere die Querbeschleunigung des Fahrzeugs wiedergeben. Hierdurch können nichtlineare Effekte wie die Ausfederung der kurveninneren Reifen und die Einfederung der kurvenäußeren Reifen infolge der Wankmomentabstützung, insbesondere durch empirisch ermittelte Kennwerte, berücksichtigt werden. Durch eine weitere Verarbeitung des so erlangten Signals der stationären (der Lenkwinkel ist konstant) Querbeschleunigung in einem Filter zweiter Ordnung wird das Signal der stationären Querbeschleunigung dynamisiert.

Die Merkmale der Oberbegriffe der unabhängigen Ansprüche sind der DE 41 40 239 A1 entnommen.

Die Aufgabe der vorliegenden Erfindung besteht darin, die Regelung von die Fahrzeugbewegung repräsentierenden Bewegungsgrößen zu verbessern.

Vorteile der Erfindung

Vorteilhafterweise enthält die Vorrichtung zur Regelung von die Fahrzeugbewegung repräsentierenden Bewegungsgrößen wenigstens zwei Regelungsvorrichtungen (405, 406, 407), die unabhängig voneinander, mit Hilfe geeigneter Aktuatoren (409, 410, 413, 416, 417), ausgehend von mit ersten Mitteln (401) erfaßten, die Fahrzeugbewegung repräsentierenden Größen, Regelungseingriffe zur Stabilisierung des Fahrzeuges durchführen.

Vorteilhafterweise soll folgendes gelten: Wenigstens eine der Regelungsvorrichtungen (405) greift mit den von ihr durchgeführten Regelungseingriffen, in die Bremsen (410) und/oder in den Motor (409) des Fahrzeuges ein, und wenig-stens eine der Regelungsvorrichtungen (406) greift mit den von ihr durchgeführten Regelungseingriffen, in die Lenkung (413) des Fahrzeuges ein, und/oder wenigstens eine der Regelungsvorrichtungen (407) greift mit den von ihr durchgeführten Regelungseingriffen, in die Fahrwerksaktuatoren (416) des Fahrzeuges ein. Auch kann es von Vorteil sein, wenn wenigstens eine der Regelungsvorrichtungen (406), mit den von ihr durchgeführten Regelungseingriffen in die Lenkung (413) des Fahrzeuges eingreift, und wenn wenigstens eine der Regelungsvorrichtungen (407), mit den von ihr durchgeführten Regelungseingriffen in die Fahrwerksaktuatoren (416) des Fahrzeuges eingreift.

Von Vorteil ist es, wenn mit Hilfe 2. Mittel (404), ausgehend von den mit 1. Mitteln erfaßten Größen, die die Fahrzeugbewegung repräsentieren, Signale und/oder Größen ermittelt werden, mit denen wenigstens eine der wenigstens zwei Regelungsvorrichtungen zumindest zeitweise so beeinflußt wird, daß dadurch das Fahrzeug stabilisiert wird. Außerdem werden die Regelungsvorrichtungen so beeinflußt, daß sie gut zusammenwirken, sich gegenseitig nicht stören und somit eine gute Gesamtwirkung, was die Stabilisierung des Fahrzeuges angeht, ergeben. Dabei führt wenigstens eine der wenigstens zwei Regelungsvorrichtungen solange durch die zweiten Mittel unbeeinflußt Regelungseingriffe zur Stabilisierung des Fahrzeuges durch, bis sie durch die mit Hilfe der zweiten Mittel ermittelten Signale und/oder Größen beeinflußt wird.

Von Vorteil ist es, daß die Vorrichtung 3. Mittel (402, 403) enthält, denen die mit den 1. Mitteln erfaßten Größen, die die Fahrzeugbewegung repräsentieren, zugeführt werden. Dabei werden mit den 3. Mitteln, ausgehend von den die Fahrzeugbewegung repräsentierenden Größen Größen ermittelt, die den Fahrzustand des Fahrzeuges beschreiben, und/oder Größen ermittelt, die die vom Fahrer eingestellten Vorgaben beschreiben. Die Größen, die den Fahrzustand des Fahrzeuges beschreiben und/oder die Größen, die die vom Fahrer eingestellten Vorgaben beschreiben, werden den 2. Mitteln zur Ermittlung der Signale und/oder Größen, mit denen wenigstens eine der wenigstens zwei Regelungsvorrichtungen zumindest zeitweise beeinflußt werden, zugeführt.

vorteilhafterweise bestehen die Regelungsvorrichtungen (405, 406, 407) jeweils wenigstens aus Reglermitteln (408, 411, 414) und/oder Mitteln (412, 415, 418) zur Ansteuerung von der jeweiligen Regelungsvorrichtung zugewiesenen Aktuatoren (409, 410, 413, 416, 417) und/oder aus der jeweiligen Regelungsvorrichtung zugewiesenen Aktuatoren.

Vorteilhafterweise werden mit den Reglermitteln (408, 411, 414), wenigstens ausgehend von den ihnen zugeführten, mit den 1. Mitteln erfaßten Größen und den ihnen von den 2. Mitteln zugeführten Signalen und/oder Größen, Signale und/oder Größen erzeugt, die den Mitteln (412, 415, 418) zur Ansteuerung von der jeweiligen Regelungsvorrichtung zugewiesenen Aktuatoren (409, 410, 413, 416, 417) zugeführt werden. Ebenso erzeugen die Mittel zur Ansteuerung von der jeweiligen Regelungsvorrichtung zugewiesenen Aktuatoren vorteilhafterweise wenigstens ausgehend von den ihnen von den Reglermitteln zugeführten Signalen und/oder Größen und den mit den 1. Mitteln erfaßten Größen Signale und/oder Größen zur Ansteuerung der der jeweiligen Regelungsvorrichtung zugewiesenen Aktuatoren.

Als besonderen Vorteil hat sich erwiesen, wenn die Reglermittel (408, 411, 414) jeweils wenigstens aus Reglerbeeinflussungsmitteln (408a, 411a, 414a) und/oder einem Regler (408b, 411b, 414b) zur Durchführung einer für die Regelungsvorrichtung charakteristischen Regelung und/oder einem Mittel (411c, 414c) zur Realisierung von zusätzlichen Regelungseingriffen bestehen.

Vorteilhafterweise werden mit den Reglerbeeinflussungsmitteln (408a, 411a, 414a) wenigstens ausgehend von den mit den 2. Mitteln ermittelten Größen und/oder Signalen Signale und/oder Größen ermittelt, mit denen in den jeweiligen Regler (408b, 411b, 414b) eingegriffen wird. Ebenso ermittelt der Regler vorteilhafterweise wenigstens ausgehend von den mit den Reglerbeeinflussungsmitteln ermittelten Größen und/oder Signalen und den mit den 1. Mitteln erfaßten Größen Signale und/oder Größen, die den Mitteln (412, 415, 418) zur Ansteuerung von der jeweiligen Regelungsvorrichtung zugewiesenen Aktuatoren zugeführt werden.

Besonders vorteilhaft ist die Tatsache, daß mit den Mitteln (411c, 414c) zur Realisierung von zusätzlichen Regelungseingriffen wenigstens ausgehend von den mit den 1. Mitteln erfaßten Größen Signale und/ oder Größen ermittelt werden, die den Mitteln (412, 415, 418) zur Ansteuerung von der jeweiligen Regelungsvorrichtung zugewiesenen Aktuatoren zugeführt werden, wobei diese Signale und/oder Größen in den Mitteln zur Realisierung von zusätzlichen Regelungseingriffen unabhängig von den mit den 2. Mitteln ermittelten Signalen und/oder Größen ermittelt werden.

Als besonders vorteilhaft hat sich ergeben, wenn die mit den 2. Mitteln ermittelten Größen und/oder Signale enthalten:

- Signale, mit denen einzelne Regelungsvorrichtungen freigegeben und/oder gesperrt werden und/ oder mit denen die Freigabe der Regelungsvorrichtungen beeinflußt wird und/oder
- Größen, insbesondere variable Verstärkungsfaktoren, mit denen die Regelungseingriffe der einzelnen Regelungsvorrichtungen verringert und/oder vergrößert werden, und/oder
- Größen, insbesondere Eingriffsschwellen, mit denen festgelegt wird, ab welchem Wert einer Regelabweichung, die im in der Regelungsvorrichtung enthaltenen Regler ermittelt wird, Regelungseingriffe durchgeführt werden, und/oder
- Größen, insbesondere Maximalwerte, mit denen die Regelungseingriffe beschränkt werden, und/ oder
- Größen, die Sollwerte für die Regler darstellen, und/oder
- Größen, durch die die im Regler ablaufende Regelungsvorschrift vorgegeben und/oder verändert wird.

Die Regelungsvorrichtung(406), die mit den von ihr durchgeführten Regelungseingriffen in die Lenkung (413) des Fahrzeuges eingreift, besteht vorteilhafterweise:

- aus einem Reglermittel (411), welches aus einem Reglerbeeinflussungsmittel (411a), einem Regler (411b) zur Durchführung von das Fahrzeug stabilisierenden Lenkeingriffen und einem Mittel (411c) zur Realisierung von zusätzlichen Lenkeingriffen besteht, und
- aus Mitteln (412) zur Ansteuerung eines Lenkstellers, und
- als Aktuator aus einem Lenksteller (413).

Die Regelungsvorrichtung (405), die mit den von ihr durchgeführten Regelungseingriffen in die Bremsen (410) und/oder in den Motor (409) des Fahrzeuges eingreift, besteht vorteilhafterweise:

- aus einem Reglermittel (408), welches aus einem Reglerbeeinflussungsmittel (408a) und einem Regler (408b) zur Durchführung von das Fahrzeug stabilisierenden Bremsenund/oder Motoreingriffen besteht, und
- aus Mitteln (418) zur Ansteuerung der Bremsen (410) und/oder des Motors (409), und
- als Aktuatoren aus den Bremsen (410) und/oder dem Motor (409).

Die Regelungsvorrichtung (407), die mit den von ihr durchgeführten Regelungseingriffen in die Fahrwerkaktuatoren (416) des Fahrzeuges eingreift, besteht vorteilhafterweise:

- aus einem Reglermittel (414), welches aus einem Reglerbeeinflussungsmittel (414a), einem Regler (414b) zur Durchführung von das Fahrzeug stabilisierenden Fahrwerkseingriffen und einem Mittel (414c) zur Realisierung von zusätzlichen Fahrwerkseingriffen besteht, und
- aus Mitteln (415) zur Ansteuerung der Fahrwerkaktuatoren (416), und
- als Aktuatoren aus den Fahrwerksaktuatoren (416).

Weitere Vorteile der erfindungsgemäßen Vorrichtung bzw. des erfindungsgemäßen Verfahrens sind:

- Die hierarchisch modulare Koordination verschiedener Teilsysteme (405, 406, 407), die die Fahrzeugquerdynamik und insbesondere die Fahrstabilität beeinflussen.
- Jedes Teilsystem (405, 406, 407) hat einen eigenen Regler FZR (408b, 411b, 414b).
- Die Regler FZR aller Teilsysteme können gleichzeitig arbeiten.
- Die Regler FZR der Teilsysteme können autonom arbeiten und stören sich in bestimmten Fahrsituationen, z.B. im Normalbetrieb, gegenseitig nicht.
- Die Koordination durch einen Systemkoordinator (404) dient dazu, ein möglichst gutes Fahrverhalten zu erreichen, das mit den unabhängig voneinander arbeitenden Teilsystemen nicht erreicht werden kann. Gleichzeitig wird gegenseitiges Stören oder Gegeneinanderarbeiten der Teilsysteme in allen Fahrsituationen verhindert.
- Der Systemkoordinator beeinflußt die Regler FZR der Teilsysteme auf Basis der momentanen Fahrsituation bzw. des Fahrzustands und des Fahrerwunschs.
- Durch die Koordination werden diejenigen Teilsysteme eingesetzt, deren Eingriffe in der vorliegenden Situation am wirkungsvollsten sind.
- Es handelt sich um eine offene Struktur, die leicht an verschiedene Systemkonfigurationen angepaßt werden kann. Kommt ein Teilsystem hinzu, fällt weg oder wird verändert, muß nur der Systemkoordinator angepaßt werden, die anderen Teilsysteme einschließlich ihrer FZR bleiben unverändert.

- -Bei Ausfall von Teilsystemen können die anderen Teilsysteme ohne Koordination autonom weiterarbeiten. Eventuell sind in diesem Fall die Funktionen der noch funktionsfähigen Teilsysteme einzuschränken, um gegenseitiges Stören zu verhindern.
- Sofern im Systemkoordinator Notlauffunktionen vorgesehen sind, können bei Ausfall von Teilsystemen die noch funktionierenden Teilsysteme koordiniert arbeiten.
- Bei Ausfall des Systemkoordinators können die Teilsysteme autonom weiterarbeiten. Eventuell sind in diesem Fall die Funktionen der noch funktionsfähigen Teilsysteme einzuschränken, um gegenseitiges Stören zu verhindern.
- Die Teilsysteme können Zusatzfunktionen (411c, 414c), die nicht koordiniert werden müssen, grundsätzlich autonom ausführen.
- Der Systemkoordinator kann intern hierarchisch strukturiert sein.
- Die verschiedenen Funktionen des Gesamtsystems können in beliebiger Weise auf mehrere miteinander kommunizierende Steuergeräte bzw. Prozessoren verteilt werden oder von einem leistungsfähigen zentralen Steuergerät bzw. Prozessor erfüllt werden.

Zeichnung

Die Zeichnung besteht aus den Figuren 1 bis 5. Die Figur 1 zeigt beispielhaft ein aus dem Stand der Technik bekanntes System, mit dem die Fahrdynamik eines Fahrzeuges regelbar ist. Die Figuren 2 und 3 zeigen schematisch ein Lenksystem nach dem Stand der Technik. Die in den Figuren 1 bzw. 2 und 3 gezeigten Systeme sollen in der erfindungsgemäßen Vorrichtung als Regelungsvorrichtungen eingesetzt werden. Figur 4 zeigt in einer Übersichtsanordnung die erfindungsgemäße Vorrichtung zur Durchführung des erfindungsgemäßen Verfahrens. Figur 5 zeigt exemplarisch den Aufbau einer erfindungsgemäßen Regelungsvorrichtung.

Ausführungsbeispiel

Zunächst soll auf das in Figur 1 dargestellte, und aus dem Stand der Technik bekannte System zur Regelung der Fahrdynamik eines Fahrzeuges eingegangen werden. Solch ein System soll in der erfindungsgemäßen Vorrichtung als Regelvorrichtung eingesetzt werden.

In Figur 1 ist ein Fahrzeug 101 mit Rädern 102vr, 102vl, 102hr bzw. 102hl dargestellt. Nachfolgend wird für die Räder des Fahrzeugs die vereinfachende Schreibweise 102ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend. Jedem Rad 102ij ist ein Raddrehzahlsensor 103ij zugewiesen. Das vom jeweiligen Raddrehzahlsensor 103ij erzeugte Signal nijmess wird einem Steuergerät 109 zugeführt. Neben den Raddrehzahlsensoren 103ij sind im Fahrzeug 101 weitere Sensoren vorhanden. Hierbei handelt es sich um einen Drehraten- bzw. Gierratensensor 104, dessen Signal omegamess ebenfalls dem Steuergerät 109 zugeführt wird. Des weiteren handelt es sich um einen Querbeschleunigungssensor 105. Das von ihm erzeugte Signal aymess wird ebenfalls dem Steuergerät 109 zugeführt. Zusätzlich ist im Fahrzeug ein Lenkwinkelsensor 106 enthalten, mit dem wenigstens der vom Fahrer über das Lenkrad 107 und das Lenkgestänge 108 an den Vorderrädern eingestellte Lenkwinkel erfaßt wird. Das vom Lenkwinkelsensor 106 erfaßte Signal deltamess wird dem Steuergerät 109 zugeführt. Vom Motor 111 werden dem Steuergerät 109 aktuelle Motorkenndaten mot1, wie beispielsweise Motordrehzahl und/oder Drosselklappenventilstellung und/oder Zündwinkel zugeführt.

Im Steuergerät 109 werden die ihm zugeführten Signale verarbeitet bzw. ausgewertet und entsprechend der Regelung der Fahrdynamik des Fahrzeugs Stellsignale ausgegeben. Es ist denkbar, daß das Steuergerät 109 Stellsignale Aij erzeugt, mit denen den Rädern 102ij zugeordnete Aktuatoren 110ij, welche vorzugsweise Bremsen darstellen, beeinflußt werden können. Außerdem ist die Ausgabe eines Stellsignals mot2 denkbar, mit dem das vom Motor 111 abgegebene Antriebsmoment beeinflußbar ist.

Nachfolgend soll auf das in Figur 2 bzw. 3 dargestellte, und aus dem Stand der Technik bekannte Lenksystem eingegangen werden. Solch ein System soll in der erfindungsgemäßen Vorrichtung als Regelvorrichtung eingesetzt werden.

Die Figur 2 bzw. Figur 3 zeigt mit den Bezugszeichen 21 bzw. 31 ein von dem Fahrer des Fahrzeugs betätigbares Lenkrad. Durch die Betätigung des Lenkrades 21 bzw. 31 wird dem Überlagerungsgetriebe 22 bzw. 32 der Lenkradwinkel $\delta_L$ bzw. das Lenkradmoment $M_L$ zugeführt. Gleichzeitig wird dem Überlagerungsgetriebe 22 bzw. 32 der Motorwinkel $\delta_M$ des Stellantriebes 23 bzw. 33 zugeleitet, wobei der Stellantrieb als Elektromotor ausgebildet sein kann. Ausgangsseitig des Überlagerungsgetriebes 22 bzw. 32 wird die überlagerte Bewegung $\delta_L'$ dem Lenkgetriebe 24 bzw. 34 zugeführt, das wiederum über das Lenkgestänge 26 entsprechend dem Gesamtwinkel $\delta_L'$ die lenkbaren Räder 25a und 25b mit dem Lenkwinkel $\delta_V$ bzw. dem Lenkmoment Mv beaufschlagt. In der Figur 3 sind weiterhin Sensoren 38 und 36 zu sehen, wobei der Sensor 38 den Lenkradwin-

kel $\delta_L$ detektiert und dem Steuergerät 37 zuführt, während mit dem Bezugszeichen 36 Sensoren gekennzeichnet sind, die die Bewegungen des Fahrzeugs 35 (bspw. Gierbewegungen, Querbeschleunigung, Fahrzeuggeschwindigkeit usw.) sensieren und dem Steuergerät 37 zuführen. Das Steuergerät 37 ermittelt, abhängig vom erfaßten Lenkradwinkel $\delta_L$ und ggf. abhängig von den Fahrzeugbewegungen eine Stellgröße u zur Ansteuerung des Stellantriebs 23 bzw. 33.

Im folgenden soll zunächst allgemein auf das erfindungsgemäße Verfahren bzw. auf die erfindungsgemäße Vorrichtung eingegangen werden. Anschließend wird Figur 4 beschrieben.

Das querdynamische Verhalten eines Fahrzeugs, insbesondere die Fahrstabilität, kann über verschiedene Systeme bzw. Eingriffsmöglichkeiten aktiv beeinflußt werden. Sind in einem Fahrzeug mehrere solche Systeme vorhanden, dürfen die verschiedenen Systeme nicht unabhängig voneinander arbeiten, sondern die Eingriffe müssen koordiniert werden, um ein möglichst gutes Fahrverhalten zu erreichen. Für diese Koordinierungsaufgabe wird eine hierarchisch modulare Lösung vorgeschlagen.

Zur Fahrstabilisierung können verschiedene Systeme verwendet werden:

- Systeme zur Regelung der Fahrdynamik eines Fahrzeuges (FDR). Mit diesen Systemen werden unter anderem die Radlängskräfte durch Bremsen- und Motoreingriffe verändert. Solch ein System ist beispielsweise in der in der Automobiltechnischen Zeitschrift (ATZ) 96, 1994, Heft 11, auf den Seiten 674 bis 689 erschienenen Veröffentlichung "FDR - die Fahrdynamikregelung von Bosch" beschrieben.
- Systeme zur Durchführung einer elektronischen Bremskraftverteilung. Mit diesen Systemen werden ebenfalls die Radbremskräfte verändert. Solch ein System ist beispielsweise in der DE 41 12 388 A1 (entspricht der US 5,281,012) beschrieben.
- Fahrdynamisches Lenksysteme (FLS). Mit diesen Systemen wird die Querkraft an der Vorderachse durch Modifikation des Lenkwinkels verändert. Solch ein System ist beispielsweise in der DE 40 31 316 A1 (entspricht der US 5,205,371) beschrieben.
- Systeme zur Durchführung einer Hinterradlenkung. Mit diesen Systemen wird die Querkraft an der Hinterachse durch Einstellung eines Lenkwinkels an der Hinterachse verändert. Solch ein System ist beispielsweise in dem Beitrag "Servoantriebe für Vorder- und Hinterradlenkungen in Personenwagen", der am 28./29.11.1989 bei der im Haus der Technik in Essen stattgefundenen Tagung "Allradlenkungen" veröffentlicht wurde, beschrieben.
- Aktive Fahrwerksysteme, die beispielsweise als aktive Stabilisatoren ausgeführt sind. Mit diesen Systemen werden die Radaufstandskräfte und damit auch die Kräfte parallel zur Fahrbahn beeinflußt. Solch ein System ist beispielsweise in der in der Automobiltechnischen Zeitschrift (ATZ) 94, 1992, Heft 7/8, auf den Seiten 392 bis 406 erschienenen Veröffentlichung "Ein Hochleistungskonzept zur aktiven Fahrwerkregelung mit reduziertem Energiebedarf" beschrieben.
- Aktives Differentialgetriebe zur Beeinflussung der Radantriebskräfte.

Bisher arbeiten die vorstehend aufgeführten Systeme, wenn sie in einem Fahrzeug zum Einsatz kommen, weitestgehend unabhängig voneinander. Dies führt zu keinem optimalen Fahrzeugverhalten.

Ein Ansatz, um die durch verschiedene Regelsysteme realisierten Regelungsstrategien zu koordinieren, besteht darin, alle zur Verfügung stehenden Stelleingriffe von einem sehr leistungsfähigen Fahrzeugregler bestimmen zu lassen. Dies führt zwar theoretisch zu einem optimalen Verhalten, in der Praxis ergeben sich jedoch zahlreiche Schwierigkeiten:

- Schwer überschaubare Reglerstruktur.
- Aufwendiger Reglerentwurf.
- Schwierige Applikation.
- Für jede Eingriffs- bzw. Systemkombination muß ein vollständiger Regler entworfen und appliziert werden.
- Bei Ausfall eines Teilsystems muß das gesamte System abgeschaltet werden.

Diese Nachteile sollen durch die Erfindung vermieden werden.

Nachfolgend wird die erfindungsgemäße Vorrichtung zur Durchführung des erfindungsgemäßen Verfahrens anhand der Figur 4 beschrieben.

Figur 4 zeigt in Form eines Blockschaltbilds die vorgeschlagene modulare Struktur der erfindungsgemäßen Vorrichtung für die Koordination verschiedener Systeme zur Beeinflussung der Fahrzeugquerdynamik.

Die Struktur ist gegliedert in die übergeordneten Ebenen Analyse, die durch die Blöcke 402 und 403 gebildet wird, und Koordination, die durch den Block 404 gebildet wird, und in die einzelnen Systeme 405, 406, ... 407, die als Teilsysteme bzw. als Regelungsvorrichtungen bezeichnet werden.

Die Teilsysteme bzw. Regelungsvorrichtungen gliedern sich wiederum in Teilsystemregler bzw. Reglermittel, in Aktorsteuerungen bzw. Mittel zur Ansteuerung von der jeweiligen Regelungsvorrichtung zugewiesenen Aktuatoren und in Aktoren bzw. Aktuatoren.

Bei dem in Figur 4 dargestellten System handelt es sich um ein offenes System, bei dem Teilsysteme bzw. Regelungsvorrichtungen verschiedener Anzahl und Art koordiniert werden können. Beispielsweise sei in Figur 4 angenommen, daß wenigstens ein System zur Regelung der Fahrdynamik des Fahrzeuges (FDR), welches auf Motor und Bremsen des Fahrzeuges wirkt, und ein fahrdynamisches Lenksystem (FLS) vorhanden sind. Ferner sollen weitere Systeme, z.B. ein System zur aktiven Fahrwerkregelung, hinzukommen können.

Der in Figur 4 enthaltene Block 401 soll die verschiedenen in einem Fahrzeug enthaltenen Mittel zur Erfassung von die Fahrzeugbewegung repräsentierenden Größen darstellen. Beispielsweise sollen im Block 401 die in den Figuren 1, 2 bzw. 3 aufgeführten Sensoren enthalten sein. Die mit Hilfe der verschiedenen Sensoren erfaßten, die Fahrzeugbewegung repräsentierendenGrößen sind mit M bezeichnet.

Die mit Hilfe des Blockes 401 erfaßten Größen M werden einem Block,402, der Fahrsituationsanalyse, einem Block 403, der Fahrerwunscherkennung, sowie den verschiedenen Reglermitteln 408, 411 sowie 414, und den Aktorsteuerungen 412, 415 sowie 418 als Eingangsgrößen zugeführt.

Der Begriff Größen M soll hier in einem allgemeinen Sinn aufgefaßt werden. Neben den bereits erwähnten, mit Hilfe von Sensoren erfaßten Größen bzw. Signalen, kann es sich auch um aufbereitete, z.B. gefilterte oder überwachte Sensorsignale oder aus Sensorsignalen abgeleitete Größen, z.B. Schätzwerte handeln. Selbstverständlich müssen nicht, wie in Figur 4 angedeutet, alle vorstehend erwähnten Komponenten sämtliche Größen M zur Verfügung gestellt bekommen. Vielmehr kann es bzgl. der Bereitstellung der Größen M zwei Alternativen geben: Entweder werden den vorstehend erwähnten Komponenten sämtliche Größen M zugeführt, und diese Komponenten wählen aus diesen-Größen M lediglich die Größen aus, die sie fürdie interne Verarbeitung benötigen. Oder den vorstehend erwähnten Komponenten werden lediglich die in den Größen M enthaltenen, zur internen Verarbeitung benötigten Größen zugeführt. In diesem Fall werden den einzelnen Komponenten nur diejenigen Größen M zur Verfügung gestellt, die für die Erfüllung der in ihnen implementierten Funktionen erforderlich sind.

Die in Figur 4 gezeigte Darstellung entspricht der ersten Alternative. Zur Darstellung der zweiten Alternative müßten in Figur 4 anstelle des Symbols M entsprechend indizierte Symbole verwendet werden.

Die Besonderheit der Struktur der erfindungsgemäßen Vorrichtung besteht darin, daß jedes Teilsystem bzw. jede Regelungsvorrichtung eine eigene Fahrzeugregelung FZR bzw. einen eigenen Regler FZR hat. Die verschiedenen Regler FZR 408b, 411b sowie 414b regeln eine oder mehrere Größen, die das dynamische Verhalten des Fahrzeuges charakterisieren. Dabei kann es sich z.B. um die Giergeschwindigkeit, die Querbeschleunigung, den Schwimmwinkel oder die Bahnkrümmung handeln. Die Regler FZR 408b, 411b sowie 414b können auch vollständig oder teilweise aus Steuerungen bestehen. Im folgenden wird zwischen Regelungen und Steuerungen nicht weiter unterschieden.

Auf der Basis der Größen M bestimmen die Regler FZR 408b, 411b, 414b mit Hilfe ihrer jeweiligen Regelungsvorschrift die Eingriffe, d.h. die in den Signalen S enthaltenen Sollwerte SR für die jeweiligen Aktorsteuerungen bzw. Mittel zur Ansteuerung von der jeweiligen Regelungsvorrichtung zugewiesenen Aktuatoren ihres Teilsystems bzw. ihrer Regelungsvorrichtung.

An dieser Stelle sei bemerkt, daß die Schreibweise SR stellvertretend für die jeweiligen in den Reglern 408b, 411b, 414b erzeugten Sollwerte steht. Ebenso steht die Schreibweise S stellvertretend für die Signale, die jeweils ausgehend von den Reglermitteln,den Aktorsteuerungen zugeführt werden. In diesem Zusammenhang sei bereits an dieser Stelle auf die noch zu beschreibende Figur 5 verwiesen.

Durch die Sollwerte SR wird das Fahrverhalten des Fahrzeuges beeinflußt. Diese Sollwerte SR werden jeweils ausgehend vom Regler 408b einem Mittel 418 zur Ansteuerung von der Regelungsvorrichtung 405 zugewiesenen Aktuatoren, ausgehend vom Regler 411b einem Mittel 412 zur Ansteuerung von der Regelungsvorrichtung 406 zugewiesenen Aktuatoren und ausgehend vom Regler 414b einem Mittel 415 zur Ansteuerung von der Regelungsvorrichtung 407 zugewiesenen Aktuatoren zugeführt. Wie bereits oben erwähnt, sind die Sollwert SR nicht explizit in Figur 4 dargestellt, sie sind vielmehr in den Signalen S enthalten. Ferner sind in den Signalen S, wie der Darstellung in Figur 5 zu entnehmen ist, auch die Signale SF enthalten, die von den eventuell in den Regelungsvorrichtungen vorhanden Mitteln ZF erzeugt werden. Für eine detailliertere Darstellung sei an dieser Stelle auf Figur 5 verwiesen, in der die Regelungsvorrichtung 407 und insbesondere das in ihr enthaltene Reglermittel 414 detaillierter dargestellt ist.

Die Regler FZR 408b, 411b sowie 414b können autonom, d.h. unabhängig voneinander arbeiten. Ferner benötigen sie zur Ermittlung der Sollwerte SR keine Vorgaben durch den Block 404, d.h. durch den Systemkoordinator. D.h. die Regler FZR 408b, 411b sowie 414b, und mit ihnen auch die zugehörigen Teilsysteme bzw. Regelungsvorrichtungen 405, 406 sowie 407 können ihre Regelungseingriffe zur Stabilisierung des Fahrzeuges solange unbeeinflußt durchführen, bis sie durch die mit Hilfe des Blockes 404, dem Systemkoordinator, ermittelten Signale und/oder Größen E beeinflußt werden. Mit anderen Worten, den Teilsystemen 405, 406, 407 und mit ihnen den Reglern FZR 408b, 411b sowie 414b können durch den Block 404, wenn es aufgrund der Fahrzeugsituation erforderlich ist, beispielsweise Sollwerte oder Grenzwerte vorgegeben werden. Wenn es allerdings die Fahrzeugsituation zuläßt, wird auf solch eine Einflußnahme des Blockes 404 auf die Blöcke 405, 406, 407 mittels der Größen E verzichtet, so daß die Regelungsvorrichtungen ungestört nach dem in ihnen implementierten und unbeeinflußten Regelungsvorschriften regeln können. An dieser Stelle sei bemerkt, daß die Schreibweise E die in Figur 4 dargestellten Größen E1, E2, E3 umfassen soll.

Ferner sind die Regler FZR 408b, 411b sowie 414b so ausgelegt, daß sie sich in bestimmten Fahrsituationen, d.h. hauptsächlich im Normalbetrieb, gegenseitig nicht stören und nicht gegeneinander arbeiten.

Um ein gutes Zusammenwirken und damit ein möglichst gutes Fahrverhalten zu erreichen und um gegenseitiges Stören der Teilsysteme in allen Fahrsituationen zu verhindern, werden die Eingriffe durch einen Systemkoordinator, Block 404, koordiniert.

Der Systemkoordinator, Block 404, hat die Möglichkeit, über die Größen E in die entsprechende Regelungsvorrichtung 405, 406 und 407, genauer gesagt in den entsprechenden Teilsystemregler bzw. in das entsprechende Reglermittel 408, 411, 414 einzugreifen. Mit den Größen E1 kann er in die Regelungsvorrichtung 405, mit den Größen E2 in die Regelungsvorrichtung 406 und mit den Größen E3 in die Regelungsvorrichtung 407 eingreifen. Hierzu werden mit den Größen E1, E2 und E3 die jeweiligen Reglerbeeinflussungsmittel RBE 408a, 411a, 414a beeinflußt. Ausgehend von den ihnen zugeführten Größen E erzeugen diese Reglerbeeinflussungsmittel RBE Größen R1, R2 und R3, die den zugehörigen Reglern FZR 408b, 411b sowie 414b zugeführt werden.

Die in Figur 4 gewählte Darstellung zeigt, daß jedem Reglerbeeinflussungsmittel RBE 408a, 411a, 414a individuelle Größen E1 bzw. E2 bzw. E3 zugeführt werden. Alternativ ist es auch denkbar, daß der Systemkoordinator eine für alle Reglerbeeinflussungsmittel RBE einheitliche Größe E ausgibt, und die Reglerbeeinflussungsmittel RBE sich die jeweils für sich erforderlichen Größen E herausnehmen.

Auf Seiten der Teilsystemregler bzw. der Reglermittel 408, 411, 414 sind die bereits erwähnten Reglerbeeinflussungsmittel RBE 408a, 411a, 414a vorhanden. Diese Reglerbeeinflussungsmittel setzen die vom Systemkoordinator 404 erzeugten Größen E in die teilsystemspezifischen Regelungsmodifikationen um. An dieser Stelle sei auf Figur 5 verwiesen, die weiter unten beschrieben wird.

Als vom Systemkoordinator 404 erzeugte Beeinflussungsgrößen bzw. Größen E, mit denen die Teilsysteme bzw. die Regelungsvorrichtungen beeinflußt werden können, bieten sich an:

- Freigabesignale, mit denen die Freigabe der Reglermittel 408, 411 und 414 beeinflußt wird. Da prinzipiell gemäß Figur 4 zwei unterschiedliche Strukturen für die Reglermittel vorgesehen sind, sind hierbei zwei unterschiedliche Varianten der Freigabebeeinflussung denkbar. Besteht das Reglermittel lediglich aus einem Reglerbeeinflussungsmittel RBE und einem Regler FZR, siehe beispielsweise Reglermittel 408, so wird über das Freigabesignal der Regler FZR und somit gleichzeitig das Reglermittel freigegeben. In diesem Fall entspricht die Freigabe des Reglers FZR der Freigabe des Reglermittels. Besteht dagegen das Reglermittel aus einem Reglerbeeinflussungsmittel RBE, einem Regler FZR und Mitteln ZF zur Durchführung von Zusatzfunktionen, wie es beispielsweise das Reglermittel 414 zeigt, so ist mit der Freigabe des Reglers FZR nicht mehr direkt die Freigabe des Reglermittels verbunden. Das Mittel ZF arbeitet unabhängig von der Freigabe des Reglers FZR, weswegen das Reglermittel auch dann Signale S erzeugen kann, wenn der Regler FZR nicht freigegeben ist.
  An dieser Stelle sei bemerkt, daß unter Freigeben eines Reglers zu verstehen ist, daß Eingriffe des Reglers freigegeben oder erlaubt bzw. ermöglicht werden.
- Größen im Sinne von variablen Verstärkungsfaktoren, mit denen die Eingriffe der Regler FZR verringert oder vergrößert werden.
- Größen, insbesondere Eingriffsschwellen, mit denen festgelegt wird, ab welchem Wert einer Regelabweichung, die im in der Regelungsvorrichtung enthaltenen Regler ermittelt wird, Regelungseingriffe durchgeführt werden.
- Größen, insbesondere Maximalwerte, mit denen die Regelungseingriffe beschränkt werden.
- Größen, die Sollwerte für die Regler FZR darstellen.
- Größen, durch die die im Regler FZR ablaufende Regelungsvorschrift vorgegeben und/oder verändert wird. Ist die Regelungsvorschrift beispielsweise in Form einer PID-Regelung realisiert, so ist es denkbar, die einzelnen Regelanteile, d.h. den Proportional-, den Integral- bzw. den Differentialanteil durch Vorgabe entsprechender Koeffizienten unterschiedlich stark zu bewerten. Dies kann beispielsweise auch dazu führen, daß ein Anteil gänzlich zurückgenommen wird.

Dabei sollen sich die Beeinflussungsgrößen bzw. die Größen E für verschiedene Teilsysteme hinsichtlich ihrer physikalischen und logischen Bedeutung entsprechen, oder es sollen sogar gleiche Beeinflussungsgrößen bzw. Größen E für mehrere Teilsysteme verwendet werden. Beispielsweise seien hier die Sollwerte aufgeführt.

Der Systemkoordinator 404 legt die Beeinflussungsgrößen auf der Grundlage der Ergebnisse einer im Block 402 ablaufenden Fahrsituationsanalyse und auf der Grundlage einer im Block 403 ablaufenden Fahrerwunscherkennung fest.

Bei der im Block 402 stattfindenden Fahrsituationsanalyse werden ausgehend von den mit Hilfe des Blockes 401 ermittelten Größen M, die die Fahrzeugbewegung repräsentierende Größen darstellen, Größen ermittelt, die den Fahrzustand des Fahrzeuges beschreiben. Diese in Figur 4 mit Fahrsituation bezeichneten Größen werden dem Systemkoordinator 404 zugeführt. Diese Größen stellen gewissermaßen Istwerte dar.

Bei diesen Größen kann es sich beispielsweise um die Radgeschwindigkeiten, die Fahrzeuggeschwindigkeit, die am Fahrzeug angreifende Querbeschleunigung, die Gierrate des Fahrzeugs um seine Hochachse, den Schwimmwinkel des Fahrzeugs, die Schräglaufwinkel an der Vorder- bzw. an der Hinterachse, die Reifenkräfte, die Radbremszylinderdrücke oder den am jeweiligen Rad vorliegenden Schlupf sowie weitere Größen handeln. Einige dieser Größen werden direkt mit Hilfe von Sensoren erfaßt. Diese Größen werden normalerweise im Block 402 nicht modifiziert, sie werden quasi ausgehend von den Mitteln 401 unverändert durch den Block 402 "durchgeschleift". Hierbei handelt es sich beispielsweise um die Gierrate, die Querbeschleunigung oder um die Radgeschwindigkeiten. Andere Größen, wie beispielsweise der Schwimmwinkel oder die Schräglaufwinkel ergeben sich beispielsweise durch Modellbildung aus entsprechenden Eingangssignalen.

Ferner sei bemerkt, daß die im Block 402 stattfindende Fahrsituationsanalyse auf Basis von Meßgrößen zusätzlich zu dem Zustand des Fahrzeuges auch den der Umgebung analysiert. Insbesondere erkennt sie, ob sich das Fahrzeug im dynamischen Grenzbereich befindet oder sich diesem annähert, d.h. es wird festgestellt, wie groß die vom Reibwert $\mu$ ausgehende Reserve ist. Außerdem erkennt sie Umgebungsbedingungen, wie z.B. den zwischen Fahrbahn und Reifen vorhandenen Reibwert $\mu$, eine Fahrbahn mit auf die Fahrzeugseiten bezogenen unterschiedlichen Reibwerten ($\mu$-split) und beispielsweise die Ausschöpfung des Querkraftpotentials des Fahrzeugs.

Bei der im Block 403 stattfindenden Fahrerwunscherkennung werden ausgehend von den mit Hilfe des Blockes 401 ermittelten Größen M, die die Fahrzeugbewegung und Bedienung des Fahrzeuges repräsentierende Größen darstellen, Größen ermittelt, die die vom Fahrer eingestellten Vorgaben beschreiben. Diese in Figur 4 mit Fahrerwunsch bezeichneten Größen werden dem Systemkoordinator 404 zugeführt. Diese Größen stellen gewissermaßen Sollwerte dar. Bei diesen Größen kann es sich beispielsweise um die Sollgierrate, den vom Fahrer eingestellten Lenkwinkel, Sollwerte für die Längs- bzw. Querbeschleunigung des Fahrzeuges, Sollwerte für die Verzögerung des Fahrzeuges, den vom Fahrer eingestellten Vordruck sowie weitere Größen handeln.

Zusammenfassend läßt sich festhalten, daß die Fahrerwunscherkennung aus den Aktionen des Fahrers die gewünschte Fahrzeugbewegung ableitet. Die Aktionen des Fahrers werden über die Messung von Größen, die der Fahrer über die Fahrzeugbedienelemente einstellt, z.B. Lenkradwinkel, Vordruck oder Bremspedalstellung und Fahrpedalstellung, erfaßt. Beispielsweise ergeben sich aus der Stellung des Bremspedals bzw. der Stellung des Fahrpedals Werte für die Verzögerung oder die Beschleunigung des Fahrzeugs. Die Querbeschleunigung kann beispielsweise in bekannter Weise durch Modellbildung ausgehend vom Lenkwinkel ermittelt werden. Es ist auch denkbar, die eine oder andere Größe direkt mit Hilfe eines Sensors zu erfassen.

An dieser Stelle sei festgehalten, daß in Abhängigkeit des im Fahrzeug implementierten Bremsensystems unterschiedliche Größen zur Beschreibung der Aktionen des Fahrers bzgl. des jeweiligen Bremsensystems benötigt werden. Für das Teilsystem 405, können verschiedene Bremsanlagen in Frage kommen. Es kann eine hydraulische Bremsanlage, wie sie beispielsweise aus der in der Automobiltechnischen Zeitschrift (ATZ) 96, 1994, Heft 11, auf den Seiten 674 bis 689 erschienenen Veröffentlichung "FDR - die Fahrdynamikregelung von Bosch" bekannt ist, zum Einsatz kommen. Ferner kann auch eine elektrohydraulische Bremsanlage verwendet werden, wie sie beispielsweise aus der WO 97/00433 bekannt ist. Alternativ zu hydraulischen Bremsanlagen können auch pneumatische bzw. elektro-pneumatische Bremsanlagen eingesetzt werden. Außerdem kann eine elektromotorische Bremsanlage verwendet werden, bei der die Bremskraft direkt durch mit den Bremsbacken und/oder den Bremsbelägen gekoppelte Stellmotoren generiert wird.

Je nachdem, was für eine Art von Bremsanlage zum Einsatz kommt, ist zur Beschreibung der Aktion des Fahrers wenigstens der von ihm eingestellte Vordruck oder eine die Pedalstellung beschreibende Größe oder beide Größen zusammen erforderlich.

Im Systemkoordinator wird ausgehend von den Signalen Fahrsituation und Fahrerwunsch ermittelt, welche Teilsysteme bzw. welche Regelungsvorrichtungen am besten geeignet sind, und wie sie eingreifen sollen, um in der momentanen Fahrsituation ein wunschgemäßes Fahrverhalten zu erreichen.

Zusätzlich zur Fahrzeugregelung, die vorwiegend durch die Regler FZR realisiert wird, können die Teilsysteme bzw. Regelungsvorrichtungen 405, 406, 407 Zusatzfunktionen ZF wahrnehmen. Zu diesem Zweck enthalten beispielsweise die Reglermittel 411 bzw. 414 die Blöcke ZF 411c bzw. 414c. Die Eingriffe der Blöcke ZF bzw. der Mittel 411c bzw. 414c zur Realisierung zusätzlicher Regelungseingriffe müssen nicht koordiniert werden. Dies vor allem deshalb, weil sie beispielsweise die Fahrzeugquerdynamik nicht oder nur geringfügig beeinflussen. Bei diesen Zusatzfunktionen bzw. bei diesen mit Hilfe der Mittel 411c bzw. 414c realisierten zusätzlichen Regelungseingriffen handelt es sich beispielsweise um Komfortfunktionen.

Bei dem Reglermittel 406, welches ein fahrdynamisches Lenksystem (FLS) darstellt, kann durch das Mittel 411c der Zusammenhang zwischen dem Lenkradwinkel, der vom Fahrer am Lenkrad eingestellt wird, und dem Radlenkwinkel, der sich aufgrund der Fahrervorgabe an den lenkbaren Rädern einstellt, in Abhängigkeit der Fahrzeuggeschwindigkeit modifiziert werden. Bei dem Reglermittel 407, welches beispielsweise eine aktive Fahrwerkregelung darstellen soll, kann beispielsweise mit Hilfe des Mittel 414c eine Horizontierung des Fahrzeuges bei Kurvenfahrt erreicht werden. Dies bedeutet, daß durch die aktive Fahrwerkregelung bei und während einer Kurvenfahrt die Fahrwerksaktuatoren in bekannter Weise so beeinflußt werden, daß das Fahrzeug keine Wankbewegung zeigt.

Die Mittel ZF 411c bzw. 414c werden vom Systemkoordinator 404 nicht beeinflußt, satt dessen werden sie vollständig autonom von den Teilsystemreglern bzw. den Reglermitteln 411 bzw. 414 ausgeführt. Selbstverständlich können die Zusatzfunktionen anstelle von geregelt auch gesteuert sein. Die Sollwerte S eines Teilsystems bzw. einer Regelungsvorrichtung werden also sowohl von den Reglern FZR des Teilsystems als auch, sofern vorhanden, von den Mitteln ZF zur Realisierung von zusätzlichen Regelungseingriffen dieses Teilsystems bestimmt. An dieser Stelle sei auf Figur 5 verwiesen, in der der vorstehende Sachverhalt dargestellt ist.

Das Teilsystem (FDR) bzw. die Regelungsvorrichtung 405, die mit den von ihr durchgeführten Regelungseingriffen in die Bremsen und/oder in den Motor des Fahrzeuges eingreift, gibt vorzugsweise Sollwerte für die Radmomente, Radmomentenänderungen, Radschlüpfe oder Radschlupfänderungen vor. Diese Sollwerte S1 werden in bekannter weise mit Hilfe einer Aktorsteuerung bzw. mit Hilfe eines Mittels 418 zur Ansteuerung von der Regelungsvorrichtung 405 zugewiesenen Aktuatoren in entsprechende Signale AM zur Beeinflussung des Motors 409 bzw. in entsprechende Signale AB zur Beeinflussung der Bremsen 410 umgesetzt. Dabei ist beispielsweise solch eine Aufteilung vorteilhaft, daß schnell erforderliche Änderungen mit Hilfe der Bremsen und weniger schnell erforderliche Änderungen mit Hilfe des Motors realisiert werden.

Als zum Einsatz kommende Bremsanlagen sind folgende Bremsanlagen denkbar: Eine hydraulische oder elektrohydraulische Bremsanlage, bei der mit Hilfe von Ansteuerzeiten repräsentierenden Signalen Hydraulikventile angesteuert werden - bei der elektrohydraulischen Bremsanlage gehen in diese Signale wenigstens der vom Fahrer erzeugte Vordruck und ein den Pedalweg des Bremspedales repräsentierendes Signal ein. Eine pneumatische oder elektropneumatische Bremsanlage, bei der mit Hilfe von Ansteuerzeiten repräsentierenden Signalen Pneumatikventile angesteuert werden. Eine elektromotorische Bremsanlage, bei der als Aktuatoren mit den Bremsbacken und/oder den Bremsbelägen gekoppelte Stellmotoren verwendet werden, die mit einem Ansteuersignal, welches einen Strom repräsentiert angesteuert werden.

An dieser Stelle sei bemerkt, daß die in Figur 4 enthaltenen Signale AM bzw. AB bzw. AL bzw. A allgemein als Aktoransteuersignale bzw. als Aktuatoransteuersignale bezeichnet werden. Ausgehend von dem Signal AM wird beispielsweise durch eine Veränderung der Drosselklappenstellung das vom Motor 409 abgegebene Moment verändert. Mit Hilfe des Signals AB, welches bei entsprechenden Bremsanlagen beispielsweise Ansteuerzeiten für Bremsaktuatoren darstellen soll, werden die Bremsaktuatoren so beeinflußt, daß durch sie ein vorgegebenes Bremsmoment an den entsprechenden Rädern erzeugt wird.

Bei dem Teilsystemregler (FLS) bzw. der Regelungsvorrichtung 406, die mit den von ihr durchgeführten Regelungseingriffen in die Lenkung des Fahrzeuges eingreift, kommt als Sollwert S2 beispielsweise der vordere Lenkwinkel oder die Änderung des vorderen Lenkwinkels in Betracht. Dieser Sollwert S2 wird mit Hilfe der Aktorsteuerung bzw. dem Mittel 412 zur Ansteuerung von der Regelungsvorrichtung 406 zugewiesenen Aktuatoren in bekannter Weise in entsprechende Signale AL zur Beeinflussung des Lenkstellers 413 umgesetzt. Bei dem Signal AL handelt es sich beispielsweise um ein pulsweitenmoduliertes Signal, mit welchem ein im Lenksteller 413 enthaltener Motor zur Einstellung eines Lenkwinkels beeinflußt wird.

An dieser Stelle sei erwähnt, daß auch der Einsatz eines Teilsystemreglers denkbar ist, der den Lenkwinkel an der Hinterachse des Fahrzeuges beeinflußt.

Nachfolgend soll auf die Regelungsvorrichtung 407 eingegangen werden. Da die erfindungsgemäße Vorrichtung beliebig mit Regelungsvorrichtungen erweiterbar sein soll, ist zur Verdeutlichung dieses Sachverhalts die Regelungsvorrichtung 407 gestrichelt dargestellt. Ferner ist in diesem Zusammenhang in der Regelungsvorrichtung 407 angedeutet, daß sie eine beliebige Anzahl von Aktuatoren enthalten kann. Im vorliegenden Ausführungsbeispiel soll nun angenommen werden, daß es sich bei dem Teilsystem bzw. der Regelungsvorrichtung 407 um eine Vorrichtung zur Durchführung einer Fahrwerkregelung handelt, wie sie beispielsweise in der in der Automobiltechnischen Zeitschrift (ATZ) 94, 1992, Heft 7/8, auf den Seiten 392 bis 406 erschienenen Veröffentlichung "Ein Hochleistungskonzept zur aktiven Fahrwerkregelung mit reduziertem Energiebedarf" beschrieben ist. In diesem Zusammenhang sei angenommen, daß bei der Verwendung der Regelungsvorrichtung 407 als Fahrwerksregelung, als Aktuatoren lediglich die Aktuatoren 416 verwendet werden.

Die Regelungsvorrichtung 407, die mit den von ihr durchgeführten Regelungseingriffen in die Fahrwerkaktuatoren 416 des Fahrzeuges eingreift, gibt vorzugsweise als Sollwert S3 einen Wert für die Dämpferhärte oder für die Federhärte oder einen Wert für das einzustellende Sollniveau vor. Welcher Sollwert S3 vorgegeben wird, hängt unter anderem davon ab, ob es sich um eine aktive oder um eine passive Fahrwerkregelung handelt. Der Sollwert S3 wird mit Hilfe der Aktorsteuerung bzw. dem Mittel 415 zur Ansteuerung von der Regelungsvorrichtung 407 zugewiesenen Aktuatoren in bekannter Weise in entsprechende Signale A1 zur Beeinflussung der Fahrwerksaktuatoren 416 umgesetzt. Bei den Aktuatoren 416 kann es sich beispielsweise um eine hydraulische Aktuatoranordnung, um eine pneumatische Aktuatoranordnung oder um elektromagnetische Aktuatoren handeln. Die hydraulische bzw. die pneumatische Anordnung besteht jeweils aus verschiedenen Komponentne, wie beispielsweise Zylindern, Ventilen bzw. Drosseln. Je nach Art der zum Einsatz kommenden Fahrwerkaktuatoren kann es sich bei den Signalen A1 beispielsweise um Ansteuersignale für Ventile und/oder Drosslen, die Teil der hydraulischen oder pneumatischen Aktuatoren sind, oder um Ströme für die elektromagnetischen Aktuatoren handeln.

Durch die mit Hilfe der Mittel 412 bzw. 418 ermittelten Signale AL, AM bzw. AB werden die zugehörigen Aktoren bzw. Aktuatoren so gesteuert oder geregelt, daß die mit Hilfe der Regler FZR ermittelten Sollwerte und die durch die Mittel ZF vorgegebenen Werte eingestellt werden.

In Figur 5 ist beispielhaft für die Regelvorrichtung 407 ihr innerer Aufbau in detaillierter Form dargestellt. Diese Darstellung gilt entsprechend auch für die Regelvorrichtung 406.

Dem Reglerbeeinflussungsmittel 414a werden die mit Hilfe des Systemkoordinators 404 erzeugten Größen E3 zugeführt. Optional können dem Reglerbeeinflussungsmittel 414a auch die die Fahrzeugbewegung repräsentierenden Größen M zugeführt werden. Ausgehend von den ihm zugeführten Größen E3 bzw. M ermittelt das Reglerbeeinflussungsmittel 414a die Beeinflussungsgrößen R3, die dem Regler 414b zugeführt werden und durch die dieser beeinflußt wird. Neben den Beeinflussungsgrößen R3 werden dem Regler 414b auch die die Fahrzeugbewegung repräsentierenden Größen M zugeführt. Ausgehend von den ihm zugeführten Größen ermittelt der Regler 414b die Sollwerte SR3, die einem Verknüpfungsmittel 419 zugeführt werden.

Dem Mittel 414c zur Durchführung einer Zusatzfunktion ZF werden die die Fahrzeugbewegung repräsentierenden Größen M zugeführt. In Abhängigkeit dieser Größen ermittelt das Mittel 414c die Größen SF3, die dem Verknüpfungsmittel 419 zugeführt werden.

Mit Hilfe des Verknüpfungsmittels 419 werden die Größen SR3 und SF3 zu den Größen S3 verknüpft. Bei dieser Verknüpfung kann es sich beispielsweise um ein Aufaddieren der beiden Größen SR3 und SF3 zu den Größen S3 handeln. Es sind aber auch andere Verknüpfungen denkbar. So können die beiden Größen SR3 und SF3 beispielsweise auch gewichtet miteinander zu den Größen S3 verknüpft werden.

Die Größen S3 werden ausgehend von dem Verknüpfungsmittel 419 dem Mittel 415 zur Ansteuerung von der Regelungsvorrichtung 407 zugewiesenen Aktuatoren zugeführt. Neben den Größen S3 werden dem Mittel 415 zur Ansteuerung von der Regelungsvorrichtung 407 zugewiesenen Aktuatoren auch die die Fahrzeugbewegung repräsentierenden Größen M zugeführt. Ausgehend von den ihm zugeführten Größen ermittelt das Mittel 415 die Signale A1 bis A2 zur Ansteuerung der der Regelungsvorrichtung 407 zugewiesenen Aktuatoren 416 bis 417.

Abschließend sei bemerkt, daß die im Ausführungsbeispiel gewählte Form der Darstellung keine Einschränkung der erfindungswesentlichen Idee darstellen soll.

## Patentansprüche

1. Vorrichtung zur Regelung von die Fahrzeugbewegung repräsentierenden Bewegungsgrößen,
   die 1. Mittel (401) zur Erfassung von die Fahrzeugbewegung repräsentierenden Größen enthält,
   die wenigstens zwei Regelungsvorrichtungen (405, 406, 407) enthält, die unabhängig voneinander, mit Hilfe geeigneter Aktuatoren (409, 410, 413, 416, 417), ausgehend von den mit Hilfe der 1. Mittel erfaßten, die Fahrzeugbewegung repräsentierenden Größen, Regelungseingriffe zur Stabilisierung des Fahrzeuges durchführen,
   wobei von den wenigstens zwei Regelungsvorrichtungen

   - wenigstens eine der Regelungsvorrichtungen (405), mit den von ihr durchgeführten Regelungseingriffen in die Bremsen (410) und/oder in den Motor (409) des Fahrzeuges eingreift und wenigstens eine der Regelungsvorrichtungen (406) mit den von ihr durchgeführten Regelungseingriffen in die Lenkung (413) des Fahrzeuges eingreift, oder
   - wenigstens eine der Regelungsvorrichtungen (405), mit den von ihr durchgeführten Regelungseingriffen in die Bremsen (410) und/oder in den Motor (409) des Fahrzeuges eingreift und wenigstens eine der Regelungsvorrichtungen (407) mit den von ihr durchgeführten Regelungseingriffen in die Fahrwerksaktuatoren (416) des Fahrzeuges eingreift, oder
   - wenigstens eine der Regelungsvorrichtungen (406), mit den von ihr durchgeführten Regelungseingriffen in die Lenkung (413) des Fahrzeuges eingreift und wenigstens eine der Regelungsvorrichtungen (407) mit den von ihr durchgeführten Regelungseingriffen in die Fahrwerksaktuatoren (416) des Fahrzeuges eingreift,

   die 2. Mittel (404) enthält, mit denen ausgehend von den mit den 1. Mitteln erfaßten Größen, Signale und/oder Größen ermittelt werden, mit denen wenigstens eine der wenigstens zwei Regelungsvorrichtungen zumindest zeitweise so beeinflußt wird, daß dadurch das Fahrzeug stabilisiert wird,
   **dadurch gekennzeichnet, dass**
   wenigstens eine der wenigstens zwei Regelungsvorrichtungen solange durch die zweiten Mittel unbeeinflußt Regelungseingriffe zur Stabilisierung des Fahrzeuges durchführt, bis sie durch die mit Hilfe .der zweiten Mittel ermittelten_Signale und/oder Größen beeinflußt wird.

2. Vorrichtung nach Anspruch 1, **dadurch gekennzeichnet,**
   **daß** die mit den 1. Mitteln (401) erfaßten Größen 3.

Mitteln (402, 403) zugeführt werden, mit denen ausgehend von den die Fahrzeugbewegung repräsentierenden Größen Größen ermittelt werden, die den Fahrzustand des Fahrzeuges beschreiben, und/oder

**daß** mit den 3. Mitteln Größen ermittelt werden, die die vom Fahrer eingestellten Vorgaben beschreiben, und

**daß** die Größen, die den Fahrzustand des Fahrzeuges beschreiben und/oder die Größen, die die vom Fahrer eingestellten Vorgaben beschreiben, den 2. Mitteln (404) zur Ermittlung der Signale und/oder Größen, mit denen wenigstens eine der wenigstens zwei Regelungsvorrichtungen zumindest zeitweise beeinflußt werden, zugeführt werden.

**3.** Vorrichtung nach Anspruch 1, **dadurch gekennzeichnet,**

**daß** die Regelungsvorrichtungen (405, 406, 407) jeweils wenigstens aus Reglermitteln (408, 411, 414) und/oder Mitteln (412, 415, 418) zur Ansteuerung von der jeweiligen Regelungsvorrichtung zugewiesenen Aktuatoren und/oder aus der jeweiligen Regelungsvorrichtung zugewiesenen Aktuatoren (409, 410, 413, 416, 417) bestehen.

**4.** Vorrichtung nach Anspruch 3, **dadurch gekennzeichnet,**

**daß** mit den Reglermitteln (408, 411, 414), wenigstens ausgehend von den ihnen zugeführten, mit den 1. Mitteln erfaßten Größen und den ihnen von den 2. Mitteln zugeführten Signalen und/oder Größen, Signale und/oder Größen erzeugt werden, die den Mitteln (412, 415, 418) zur Ansteuerung von der jeweiligen Regelungsvorrichtung zugewiesenen Aktuatoren zugeführt werden, und/oder

**daß** die Mittel zur Ansteuerung von der jeweiligen Regelungsvorrichtung zugewiesenen Aktuatoren wenigstens ausgehend von den ihnen von den Reglermitteln zugeführten Signalen und/oder Größen und den mit den 1. Mitteln erfaßten Größen Signale und/oder Größen zur Ansteuerung der der jeweiligen Regelungsvorrichtung zugewiesenen Aktuatoren (409, 410, 413, 416, 417) erzeugen.

**5.** Vorrichtung nach Anspruch 3, **dadurch gekennzeichnet,**

**daß** die Reglermittel (408, 411, 414) jeweils wenigstens aus Reglerbeeinflussungsmitteln (408a, 411a, 414a) und/oder einem Regler (408b, 411b, 414b) zur Durchführung einer für die Regelungsvorrichtung charakteristischen Regelung und/oder einem Mittel (411c, 414c) zur Realisierung von zusätzlichen Regelungseingriffen bestehen.

**6.** Vorrichtung nach Anspruch 5, **dadurch gekennzeichnet,**

**daß** mit den Reglerbeeinflussungsmitteln (408a, 411a, 414a) wenigstens ausgehend von den mit den 2. Mitteln ermittelten Größen und/oder Signalen Signale und/oder Größen ermittelt werden, mit denen in den jeweiligen Regler (408b, 411b, 414b) eingegriffen wird, und/oder

**daß** der Regler wenigstens ausgehend von den mit den Reglerbeeinflussungsmitteln ermittelten Größen und/oder Signalen und den mit den 1. Mitteln erfaßten Größen Signale und/oder Größen ermittelt, die den Mitteln (412, 415, 418) zur Ansteuerung von der jeweiligen Regelungsvorrichtung zugewiesenen Aktuatoren (409, 410, 413, 416, 417) zugeführt werden.

**7.** Vorrichtung nach Anspruch 5, **dadurch gekennzeichnet,**

**daß** mit den Mitteln (411c, 414c) zur Realisierung von zusätzlichen Regelungseingriffen wenigstens ausgehend von den mit den 1. Mitteln erfaßten Größen Signale und/oder Größen ermittelt werden, die den Mitteln (412, 415, 418) zur Ansteuerung von der jeweiligen Regelungsvorrichtung zugewiesenen Aktuatoren (409, 410, 413, 416, 417) zugeführt werden,

wobei diese Signale und/oder Größen in den Mitteln zur Realisierung von zusätzlichen Regelungseingriffen unabhängig. von den mit den 2. Mitteln ermittelten Signalen und/oder Größen ermittelt werden.

**8.** Vorrichtung nach einem der vorstehenden Ansprüche **dadurch gekennzeichnet,**

**daß** die mit den 2. Mitteln (404) ermittelten Größen und/oder Signale enthalten:

- Signale, mit denen einzelne Regelungsvorrichtungen (405, 406, 407) freigegeben und/oder gesperrt werden und/oder mit denen die Freigabe einzelner Regelungsvorrichtungen beeinflußt wird, und/oder
- Größen, insbesondere variable Verstärkungsfaktoren, mit denen die Regelungseingriffe der einzelnen Regelungsvorrichtungen verringert und/oder vergrößert werden, und/oder
- Größen, insbesondere Eingriffsschwellen, mit denen festgelegt wird, ab welchem Wert einer Regelabweichung, die im in der Regelungsvorrichtung enthaltenen Regler (408b, 411b, 414b) ermittelt wird, Regelungseingriffe durchgeführt werden, und/oder
- Größen, insbesondere Maximalwerte, mit denen die Regelungseingriffe beschränkt werden, und/oder
- Größen, die Sollwerte für die Regler darstellen, und/oder
- Größen, durch die die im Regler ablaufende Regelungsvorschrift, vorgegeben und/oder verändert wird.

**9.** Vorrichtung nach Anspruch 1, **dadurch gekennzeichnet,**
**daß** die Regelungsvorrichtung (406), die mit den von ihr durchgeführten Regelungseingriffen in die Lenkung (413) des Fahrzeuges eingreift,

- aus einem Reglermittel (411) besteht, welches aus einem Reglerbeeinflussungsmittel (411a), einem Regler (411b) zur Durchführung von das Fahrzeug stabilisierenden Lenkeingriffen und einem Mittel (411c) zur Realisierung von zusätzlichen Lenkeingriffen besteht, und
- aus Mitteln (412) zur Ansteuerung eines Lenkstellers (413) besteht, und
- als Aktuator aus einem Lenksteller (413) besteht, und/oder daß die Regelungsvorrichtung (405), die mit den von ihr durchgeführten Regelungseingriffen in die Bremsen. (410) und/ oder in den Motor (409) des Fahrzeuges eingreift,
- aus einem Reglermittel (408) besteht, welches aus einem Reglerbeeinflussungsmittel (408a) und einem Regler (408b) zur Durchführung von das Fahrzeug stabilisierenden Bremsen- und/ oder Motoreingriffen besteht, und
- aus Mitteln (418) zur Ansteuerung der Bremsen (410) und/oder des Motors (409) besteht, und
- als Aktuatoren aus den Bremsen (410) und/ oder dem Motor (409) besteht, und/oder

**daß** die Regelungsvorrichtung (407), die mit den von ihr durchgeführten Regelungseingriffen in die Fahrwerksaktuatoren (416) des Fahrzeuges eingreift,

- aus einem Reglermittel (414) besteht, welches aus einem Reglerbeeinflussungsmittel (414a), einem Regler (414b) zur Durchführung von das Fahrzeug stabilisierenden Fahrwerkseingriffen und einem Mittel (414c) zur Realisierung von zusätzlichen Fahrwerkseingriffen besteht, und
- aus Mitteln (415) zur Ansteuerung der Fahrwerkaktuatoren (416) besteht, und
- als Aktuatoren aus den Fahrwerksaktuatoren (416) besteht.

**10.** Verfahren zur Regelung von die Fahrzeugbewegung repräsentierenden Bewegungsgrößen,
bei dem mit 1. Mitteln (401) die Fahrzeugbewegung repräsentierende Größen erfaßt werden,
wobei zur Durchführung des Verfahrens wenigstens zwei Regelungsvorrichtungen (405, 406, 407) vorgesehen sind, die unabhängig voneinander, mit Hilfe geeigneter Aktuatoren (409, 410, 413, 416, 417), ausgehend von den mit Hilfe der 1. Mittel erfaßten, die Fahrzeugbewegung repräsentierenden Größen, Regelungseingriffe zur Stabilisierung des Fahrzeuges durchführen,
wobei von den wenigstens zwei Regelungsvorrichtungen

- wenigstens eine der Regelungsvorrichtungen (405) mit den von ihr durchgeführten Regelungseingriffen in die Bremsen (410) und/oder in den Motor (409) des Fahrzeuges eingreift und wenigstens eine der Regelungsvorrichtungen (406) mit den von ihr durchgeführten Regelungseingriffen in die Lenkung (413) des Fahrzeuges eingreift, oder
- wenigstens eine der Regelungsvorrichtungen (405), mit den von ihr durchgeführten Regelungseingriffen in die Bremsen (410) und/oder in den Motor (409) des Fahrzeuges eingreift und wenigstens eine der Regelungsvorrichtungen (407) mit den von ihr durchgeführten Regelungseingriffen in die Fahrwerksaktuatoren (416) des Fahrzeuges eingreift, oder
- wenigstens eine der Regelungsvorrichtungen (406) mit den von ihr durchgeführten Regelungseingriffen in die Lenkung (413) des Fahrzeuges eingreift und wenigstens eine der Regelungsvorrichtungen (407) mit den von ihr durchgeführten Regelungseingriffen in die Fahrwerksaktuatoren (416) des Fahrzeuges eingreift,

bei dem mit 2. Mitteln (404), ausgehend von den mit den 1. Mitteln erfaßten Größen, Signale und/oder Größen ermittelt werden, mit denen wenigstens eine der wenigstens zwei Regelungsvorrichtungen zumindest zeitweise so beeinflußt wird, daß dadurch das Fahrzeug stabilisiert wird,
**dadurch gekennzeichnet, dass**
wenigstens eine der wenigstens zwei Regelungsvorrichtungen solange durch die zweiten Mittel unbeeinflußt Regelungseingriffe zur Stabilisierung des Fahrzeuges durchführt, bis sie durch die mit Hilfe der zweiten Mittel ermittelten Signale und/oder Größen beeinflußt wird.

## Claims

**1.** Apparatus for controlling motion variables which represent vehicle movement,
which contains first means (401) for detection of variables which represent the vehicle movement,
which contains at least two control apparatuses (405, 406, 407) which carry out control actions in order to stabilize the vehicle independently of one another, with the aid of suitable actuators (409, 410, 413, 416, 417) on the basis of variables which are detected with the aid of the first means and represent vehicle movement,
in which case, of the at least two control apparatuses,

- at least one of the control apparatuses (405) intervenes by means of the control actions that are carried out by it in the brakes (410) and/or in the engine (409) of the vehicle, and at least one of the control apparatuses (406) intervenes by means of the control actions which are carried out by it in the steering (413) of the vehicle, or
- at least one of the control apparatuses (405) intervenes by means of the control actions which are carried out by it in the brakes (410) and/or in the engine (409) of the vehicle, and at least one of the control apparatuses (407) intervenes by means of the control actions which are carried out by it in the chassis actuators (416) of the vehicle, or
- at least one of the control apparatuses (406) intervenes by means of the control actions which are carried out by it in the steering (413) of the vehicle, and at least one of the control apparatuses (407) intervenes by means of the control actions which are carried out by it in the chassis actuators (406) of the vehicle,

which contains second means (404), by means of which signals and/or variables by means of which at least one of the at least two control apparatuses is influenced at least at times such that the vehicle is in this way stabilized are determined on the basis of the variables which are detected by the first means,

**characterized in that**

at least one of the at least two control apparatuses carries out control actions in order to stabilize the vehicle, without being influenced by the second means, until it is influenced by the signals and/or variables which are determined with the aid of the second means.

**2.** Apparatus according to Claim 1, **characterized in that** the variables which are detected by the first means (401) are supplied to third means (402, 403), by means of which variables which describe the driving state of the vehicle are determined on the basis of the variables which represent the vehicle movement,

and/or

**in that** the third means are used to determine variables which describe the presets which are set by the driver, and

**in that** the variables which describe the driving state of the vehicle and/or the variables which describe the presets which are set by the driver are supplied to the second means (404) in order to determine the signals and/or variables by means of which at least one of the at least two control apparatuses is influenced at least at times.

**3.** Apparatus according to Claim 1, **characterized in that** the control apparatuses (405, 406, 407) each comprise at least regulator means (408, 411, 414) and/or means (412, 415, 418) for operating actuators which are assigned by the respective control apparatus, and/or comprise actuators (409, 410, 413, 416, 417) which are assigned to the respective control apparatus.

**4.** Apparatus according to Claim 3, **characterized in that** signals and/or variables which are supplied to the means (412, 415, 418) in order to operate actuators which are assigned to the respective control apparatus are produced by means of the regulator means (408, 411, 414), at least on the basis of the variables which are supplied to them and are detected by means of the first means, and on the basis of the signals and/or variables which are supplied to it from the second means, and/or **in that** the means for operating actuators which are assigned to the respective control apparatus produce signals and/or variables for operation of the actuators (409, 410, 413, 416, 417) which are assigned to the respective control apparatus, at least on the basis of signals and/or variables which are supplied to it from the regulator means and on the basis of variables which are detected by the first means.

**5.** Apparatus according to Claim 3, **characterized in that** the regulator means (408, 411, 414) in each case comprise at least regulator influencing means (408a, 411a, 414a) and/or a regulator (408b, 411b, 414b) for carrying out closed-loop control which is characteristic of the control apparatus, and/or a means (411c, 414c) for provision of additional control actions.

**6.** Apparatus according to Claim 5, **characterized in that** signals and/or variables which are used to intervene in the respective regulator (408b, 411b, 414b) are determined by means of the regulator influencing means (408a, 411a, 414a) at least on the basis of the variables and/or signals which are determined by the second means, and/or **in that** the regulator determines signals and/or variables which are supplied to the means (412, 415, 418) in order to operate actuators (409, 410, 413, 416, 417) which are assigned to the respective control apparatus, at least on the basis of variables and/or signals which are determined by the regulator influencing means, and on the basis of variables which are detected by the first means.

**7.** Apparatus according to Claim 5, **characterized in that** signals and/or variables which are supplied to the means (412, 415, 418) for operation of actuators (409, 410, 413, 416, 417) which are assigned to the respective control apparatus are determined by the means (411c, 414c) for providing additional control actions, at least on the basis of the variables which are detected by the first means, with these signals and/or variables determined in the means for providing additional control actions, independently of the signals and/or variables which are determined by the second means.

**8.** Apparatus according to one of the preceding claims, **characterized**
**in that** the variables and/or signals which are determined by the second means (404) include:

- signals by means of which individual control apparatuses (405, 406, 407) are enabled and/or inhibited, and/or by means of which the enabling of individual control apparatuses is influenced, and/or
- variables, in particular variable gain factors, by means of which the control actions of the individual control apparatuses are decreased and/or increased, and/or
- variables, in particular action thresholds, which are used to define the value of a control error which is determined in the regulator (408b, 411b, 414b) that is included in the control apparatus, beyond which control actions are carried out, and/or
- variables, in particular maximum values, to which the control actions are restricted, and/or
- variables which represent nominal values for the regulators, and/or
- variables by means of which the control rule that is used in the regulator is preset and/or varied.

**9.** Apparatus according to Claim 1, **characterized**
**in that** the control apparatus (406) which intervenes, by means of the control actions which are carried out by it, in the steering (413) of the vehicle,

- comprises a regulator means (411) which comprises a regulator influencing means (411a), a regulator (411b) for carrying out steering actions which stabilize the vehicle, and a means (411c) for providing additional steering actions, and
- means (412) for operation of the steering actuator (413), and
- as an actuator, comprises a steering actuator (413) and/or

**in that** the control apparatus (405) which intervenes by means of the control actions which are carried out by it in the brakes (410) and/or in the engine (409) of the vehicle,

- comprises a regulator means (408) which comprises a regulator influencing means (408a) and a regulator (408b) for carrying out braking and/or engine actions which stabilize the vehicle, and
- means (418) for operation of the brakes (410) and/or of the engine (409), and
- as actuators, comprising the brakes (410) and/or the engine (409), and/or

**in that** the control apparatus (407) which intervenes by means of the control actions which are carried out by it in the chassis actuators (416) of the vehicle,

- comprises a regulator means (414) which comprises a regulator influencing means (414a), a regulator (414b) for carrying out chassis actions which stabilize the vehicle, and a means (414c) for providing additional chassis actions, and
- means (415) for operation of the chassis actuators (416), and
- as actuators, chassis actuators (416).

**10.** Method for controlling motion variables which represent vehicle movement,
in which variables which represent the vehicle movement are detected by first means (401),
with at least two control apparatuses (405, 406, 407) being provided, which carry out control actions in order to stabilize the vehicle independently of one another, with the aid of suitable actuators (409, 410, 413, 416, 417), on the basis of variables which are detected with the aid of the first means and represent the vehicle movement,
in which, of the at least two control apparatuses,

- at least one of the control apparatuses (405) intervenes by means of the control actions that are carried out by it in the brakes (410) and/or in the engine (409) of the vehicle, and at least one of the control apparatuses (406) intervenes by means of the control actions which are carried out by it in the steering (413) of the vehicle, or
- at least one of the control apparatuses (405) intervenes by means of the control actions which are carried out by it in the brakes (410) and/or in the engine (409) of the vehicle, and at least one of the control apparatuses (407) intervenes by means of the control actions which are carried out by it in the chassis actuators (416) of the vehicle, or
- at least one of the control apparatuses (406) intervenes by means of the control actions which are carried out by it in the steering (413) of the vehicle, and at least one of the control apparatuses (407) intervenes by means of the control actions which are carried out by it in the chassis actuators (406) of the vehicle,

in which signals and/or variables by means of which at least one of the at least two control apparatuses is influenced at least at times such that the vehicle is in this way stabilized or determined by second means (404), on the basis of the variables which are detected by the first means,
**characterized in that**
at least one of the at least two control apparatuses carries out control actions in order to stabilize the vehicle, without being influenced by the second means, until it is influenced by the signals and/or variables which are determined with the aid of the second means.

## Revendications

1. Dispositif de régulation de grandeurs de mouvement représentatives du mouvement d'un véhicule, comprenant
des premiers moyens (401) pour saisir des grandeurs représentatives du mouvement du véhicule, au moins deux dispositifs de régulation (405, 406, 407) qui effectuent indépendamment l'un de d'autre des interventions de régulation pour stabiliser le véhicule à l'aide d'actionneurs (409, 410, 413, 416, 417) à partir des grandeurs représentatives du mouvement du véhicule saisies par les premiers moyens,
parmi au moins deux dispositifs de régulation

   - au moins l'un des dispositifs de régulation (405) intervient par les interventions de régulation qu'il effectue au niveau des freins (410) et/ou du moteur (409) du véhicule, et au moins l'un des dispositifs de régulation (406) intervient par les interventions de régulation qu'il effectue au niveau de la direction (413) du véhicule, ou
   - au moins l'un des dispositifs de régulation (405) intervient par les interventions de régulation qu'il effectue au niveau des freins (410) et/ou du moteur (409) du véhicule, et au moins l'un des dispositifs de régulation (407) intervient par les interventions de régulation qu'il effectue au niveau des actionneurs de châssis (416) du véhicule, ou
   - au moins l'un des dispositifs de régulation (406) intervient par les interventions de régulation qu'il effectue au niveau de la direction (413) du véhicule, et au moins l'un des dispositifs de régulation (407) intervient par les interventions de régulation qu'il effectue au niveau des actionneurs de châssis (416) du véhicule,

   et comprenant des deuxièmes moyens (404) par lesquels des signaux et/ou des grandeurs sont déterminés à partir des grandeurs saisies par les premiers moyens, permettant d'influencer au moins l'un des deux dispositifs de régulation du moins temporairement de telle sorte que le véhicule se trouve stabilisé,
   **caractérisé en ce qu'**
   au moins l'un des deux dispositifs de régulation effectue des interventions de régulation pour stabiliser le véhicule sans être influencé par les deuxièmes moyens jusqu'à ce qu'il soit influencé par les signaux et/ou grandeurs déterminés à l'aide des deuxièmes moyens.

2. Dispositif selon la revendication 1,
**caractérisé en ce que**
les grandeurs saisies par les premiers moyens (401) sont fournies à des troisièmes moyens (402, 403) par lesquels sont déterminées des grandeurs à partir des grandeurs représentatives du mouvement du véhicule qui décrivent l'état de marche du véhicule, et/ou
qu'avec les troisièmes moyens des grandeurs sont déterminées qui décrivent les instructions réglées par le conducteur, et
que les grandeurs décrivant l'état de marche du véhicule et/ou les grandeurs décrivant les instructions réglées par le conducteur sont fournies aux deuxièmes moyens (404) pour déterminer les signaux et/ou grandeurs par lesquels au moins l'un des deux dispositifs de régulation est du moins temporairement influencé.

3. Dispositif selon la revendication 1,
**caractérisé en ce que**
les dispositifs de régulation (405, 406, 407) comprennent chacun au moins des moyens régulateurs (408, 411, 414) et/ou des moyens (412, 415, 418) pour commander des actionneurs associés au dispositif de régulation respectif et/ou des actionneurs (409, 410, 413, 416, 417) associés au dispositif de régulation respectif.

4. Dispositif selon la revendication 3,
**caractérisé en ce que**
par les moyens régulateurs (408, 411, 414), du moins à partir des grandeurs reçues saisies par les premiers moyens et des signaux et/ou grandeurs fournis par les deuxièmes moyens, des signaux et/ou grandeurs sont générés qui sont fournis aux moyens (412, 415, 418) pour commander les actionneurs associés au dispositif de régulation respectif, et/ou
que les moyens pour commander les actionneurs associés au dispositif de régulation respectif génèrent, du moins à partir des signaux et/ou grandeurs reçus des moyens régulateurs et des grandeurs saisies par les premiers moyens, des signaux et/grandeurs pour commander les actionneurs (409, 410, 413, 416, 417) associés au dispositif de régulation respectif.

**5.** Dispositif selon la revendication 3,
**caractérisé en ce que**
les moyens régulateurs (408, 411, 414) comprennent respectivement au moins des moyens (408a, 411a, 414a) pour influencer un régulateur et/ou un régulateur (408b, 411b, 414b) pour réaliser une régulation caractéristique du dispositif de régulation et/ou un moyen (411c, 414c) pour réaliser des interventions de régulation supplémentaires.

**6.** Dispositif selon la revendication 5,
**caractérisé en ce qu'**
avec les moyens (408a, 411a, 414a) pour influencer un régulateur, du moins à partir des grandeurs et/ou signaux déterminés par les deuxièmes moyens, des signaux et/ou grandeurs sont déterminés avec lesquels le régulateur (408b, 411b, 414b) respectif est influencé, et/ou
que le régulateur, du moins à partir des grandeurs et/ou signaux déterminés par les moyens pour influencer un régulateur et des grandeurs saisies par les premiers moyens, détermine des signaux et/ou grandeurs, qui sont fournis aux moyens (412, 415, 418) pour commander les actionneurs (409, 410, 413, 416, 417) associés au dispositif de régulation respectif.

**7.** Dispositif selon la revendication 5,
**caractérisé en ce qu'**
avec les moyens (411c, 414c), pour réaliser des interventions de régulation supplémentaires, du moins à partir des grandeurs saisies par les premiers moyens, des signaux et/ou grandeurs sont déterminés, qui sont fournis aux moyens (412, 415, 418) pour commander les actionneurs (409, 410, 413, 416, 417) associés au dispositif de régulation respectif, ces signaux et/ou grandeurs étant déterminés dans les moyens pour réaliser des interventions de régulation supplémentaires, indépendamment des signaux et/ou grandeurs déterminés par les deuxièmes moyens.

**8.** Dispositif selon l'une quelconque des revendications précédentes,
**caractérisé en ce que**
les grandeurs et/ou signaux déterminés par les deuxièmes moyens (404) comprennent :

- des signaux par lesquels différents dispositifs de régulation (405, 406, 407) sont activés et/ou désactivés et/ou par lesquels l'activation de différents dispositifs de régulation est influencée, et/ou
- des grandeurs, notamment des facteurs amplificateurs variables, par lesquelles les interventions de régulation des différents dispositifs de régulation sont réduites et/ou augmentées, et/ou
- des grandeurs, notamment des seuils d'intervention, par lesquelles est défini à partir de quelle valeur d'un écart de régulation, qui est déterminée dans le régulateur (408b, 411b, 414b) contenu dans le dispositif de régulation, des interventions de régulation sont réalisées, et/ou
- des grandeurs, notamment des grandeurs maximales, par lesquelles les interventions de régulation sont limitées, et/ou
- des grandeurs représentant des valeurs de consigne pour les régulateurs, et/ou
- des grandeurs par lesquelles l'instruction de régulation se déroulant dans le régulateur est prédéterminée et/ou modifiée.

**9.** Dispositif selon la revendication 1,
**caractérisé en ce que**
le dispositif de régulation (406) qui, par les interventions de régulation qu'il réalise intervient au niveau de la direction (413) du véhicule, comprend

- un moyen régulateur (411) comprenant un moyen (411a) pour influencer un régulateur, un régulateur (411b) pour réaliser des interventions au niveau de la direction stabilisant le véhicule et un moyen (411c) pour réaliser des interventions au niveau de la direction supplémentaires, et
- des moyens (412) pour commander un organe de direction (413), et
- un organe de direction (413) sous la forme d'un actionneur, et/ou
- que le dispositif de régulation (405), qui par les interventions de régulation qu'il réalise intervient au niveau des freins (410) et/ou du moteur (409) du véhicule, comprend
- un moyen régulateur (408) comprenant un moyen (408a) pour influencer un régulateur et un régulateur (408b) pour réaliser des interventions au niveau des freins et/ou du moteur stabilisant le véhicule, et
- des moyens (418) pour commander les freins (410) et/ou le moteur (409), et
- les freins (410) et/ou le moteur (409) sous la forme d'actionneurs, et/ou
- que le dispositif de régulation (407), qui par les interventions de régulation qu'il réalise au niveau des actionneurs de châssis (416) du véhicule, comprend
- un moyen régulateur (414) comprenant un moyen (414a) pour influencer un régulateur, un régulateur (414b) pour réaliser des interventions au niveau du châssis stabilisant le véhicule et un moyen (414c) pour réaliser des interventions supplémentaires au niveau du châssis, et

- des moyens (415) pour commander les actionneurs de châssis (416), et
- les actionneurs de châssis (416) sous la forme d'actionneurs.

**10.** Procédé de régulation de grandeurs de mouvement représentatives du mouvement d'un véhicule,
dans lequel des grandeurs représentatives du mouvement du véhicule sont saisies par des premiers moyens (401),
pour la mise en oeuvre du procédé au moins deux dispositifs de régulation (405, 406, 407) étant prévus, qui effectuent indépendamment l'un de d'autre des interventions de régulation pour stabiliser le véhicule à l'aide d'actionneurs appropriés (409, 410, 413, 416, 417) à partir des grandeurs représentatives du mouvement du véhicule saisies par les premiers moyens,
parmi au moins deux dispositifs de régulation

- au moins l'un des dispositifs de régulation (405) intervient par les interventions de régulation qu'il effectue au niveau des freins (410) et/ou du moteur (409) du véhicule, et au moins l'un des dispositifs de régulation (406) intervient par les interventions de régulation qu'il effectue au niveau de la direction (413) du véhicule, ou
- au moins l'un des dispositifs de régulation (405) intervient par les interventions de régulation qu'il effectue au niveau des freins (410) et/ou du moteur (409) du véhicule, et au moins l'un des dispositifs de régulation (407) intervient par les interventions de régulation qu'il effectue au niveau des actionneurs de châssis (416) du véhicule, ou
- au moins l'un des dispositifs de régulation (406) intervient par les interventions de régulation qu'il effectue au niveau de la direction (413) du véhicule, et au moins l'un des dispositifs de régulation (407) intervient par les interventions de régulation qu'il effectue au niveau des actionneurs de châssis (416) du véhicule, et dans lequel par des deuxièmes moyens (404) par lesquels des signaux et/ou des grandeurs sont déterminés à partir des grandeurs saisies par les premiers moyens, au moins l'un des deux dispositifs de régulation est influencé du moins temporairement de telle sorte que le véhicule se trouve stabilisé,

**caractérisé en ce qu'**
au moins l'un des deux dispositifs de régulation effectue des interventions de régulation pour stabiliser le véhicule sans être influencé par les deuxièmes moyens jusqu'à ce qu'il soit influencé par les signaux et/ou grandeurs déterminés à l'aide des deuxièmes moyens.

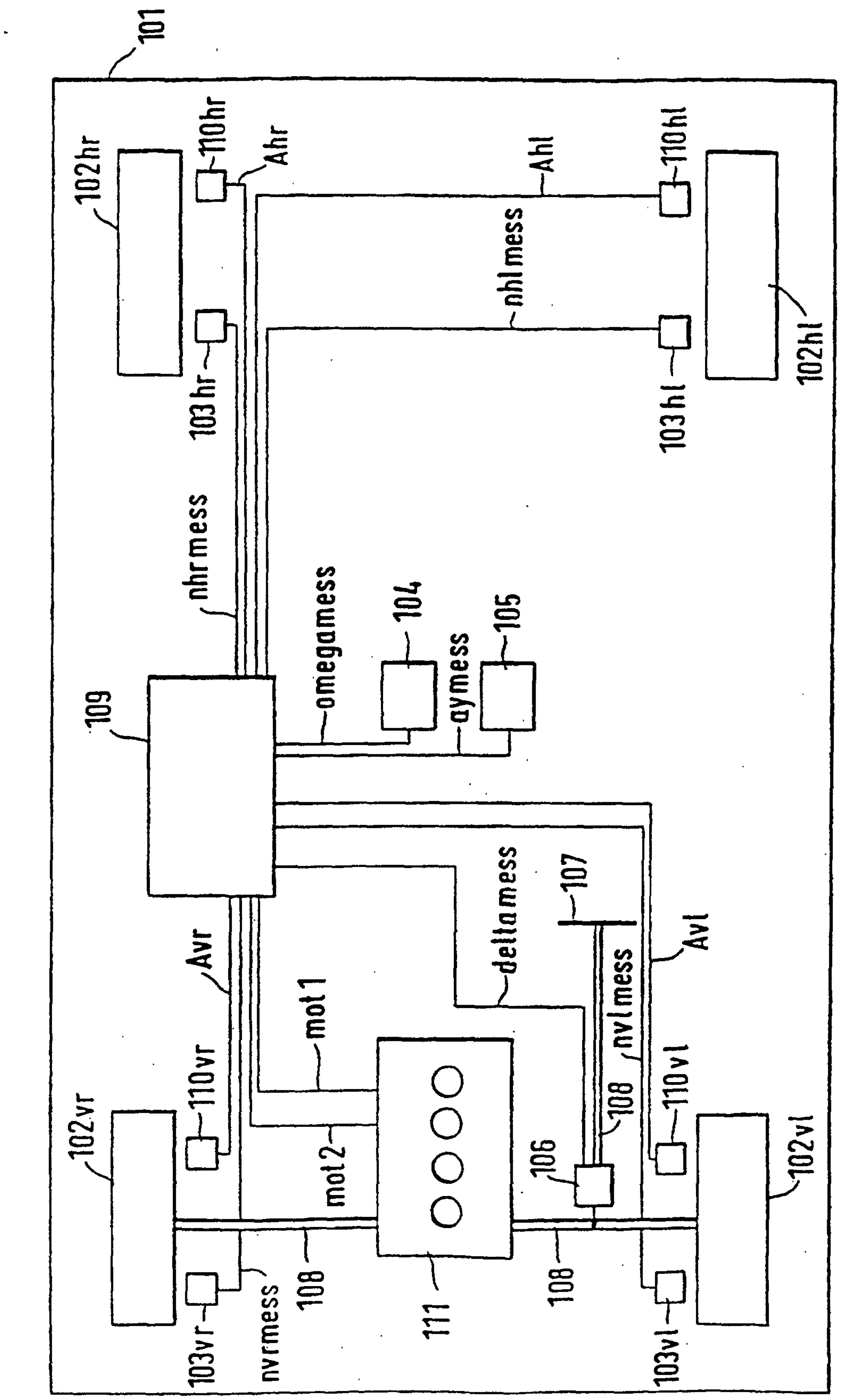
101
102hr
110hr
Ahr
Ahl
110hl
nhlmess
102hl
103hr
103hl
nhrmess
omegamess
104
109
aymess
105
107
deltamess
Avl
Avr
nvlmess
mot1
110vr
110vl
102vr
108
106
mot2
102vl
nvrmess
108
111
108
103vr
103vl

Fig.1

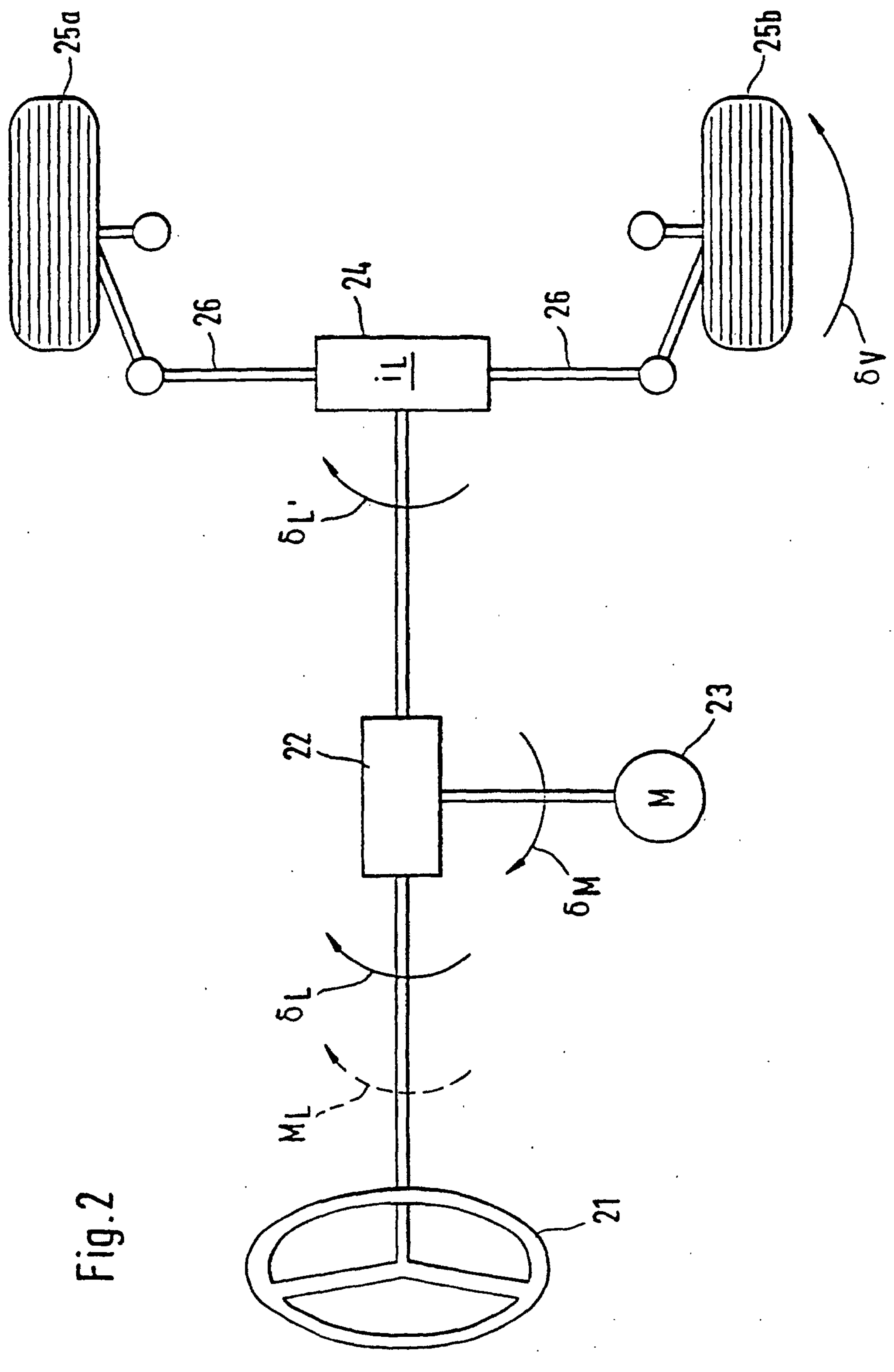


Fig. 2

Fig.3

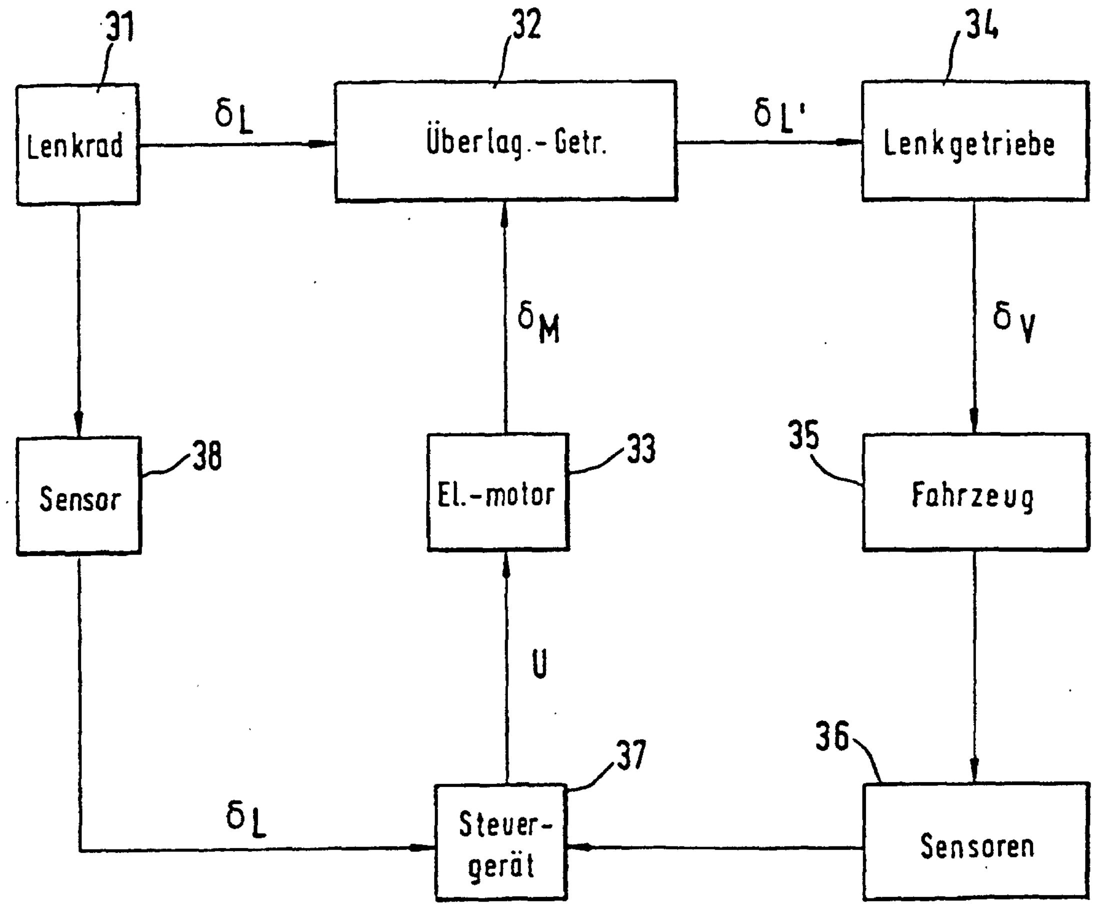
31
32
34
Lenkrad
δL
Überlag.-Getr.
δL'
Lenkgetriebe
δM
δV
Sensor
38
El.-motor
33
35
Fahrzeug
U
37
36
δL
Steuer-
gerät
Sensoren

Fig. 4

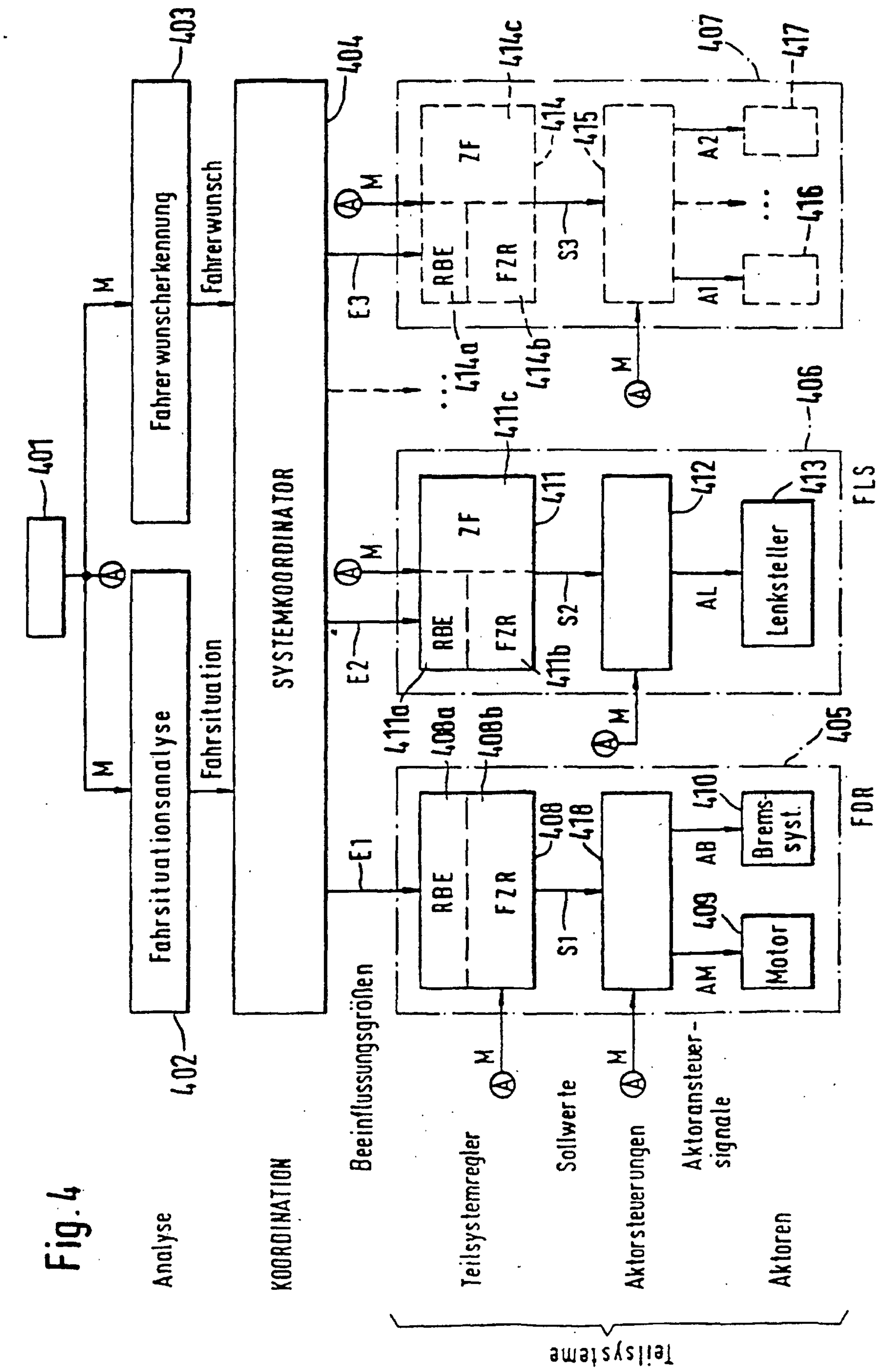

Analyse
KOORDINATION
Beeinflussungsgrößen
Teilsystemregler
Sollwerte
Aktorsteuerungen
Aktoransteuer-signale
Aktoren
Teilsysteme
401
402
403
404
405
406
407
Fahrsituationsanalyse
Fahrsituation
Fahrerwunscherkennung
Fahrerwunsch
SYSTEMKOORDINATOR
M
A
E1
E2
E3
RBE
FZR
ZF
408
408a
408b
418
S1
AM
AB
409
410
Motor
Brems-syst.
FDR
411
411a
411b
411c
412
413
S2
AL
Lenksteller
FLS
414
414a
414b
414c
415
416
417
S3
A1
A2

Fig.5

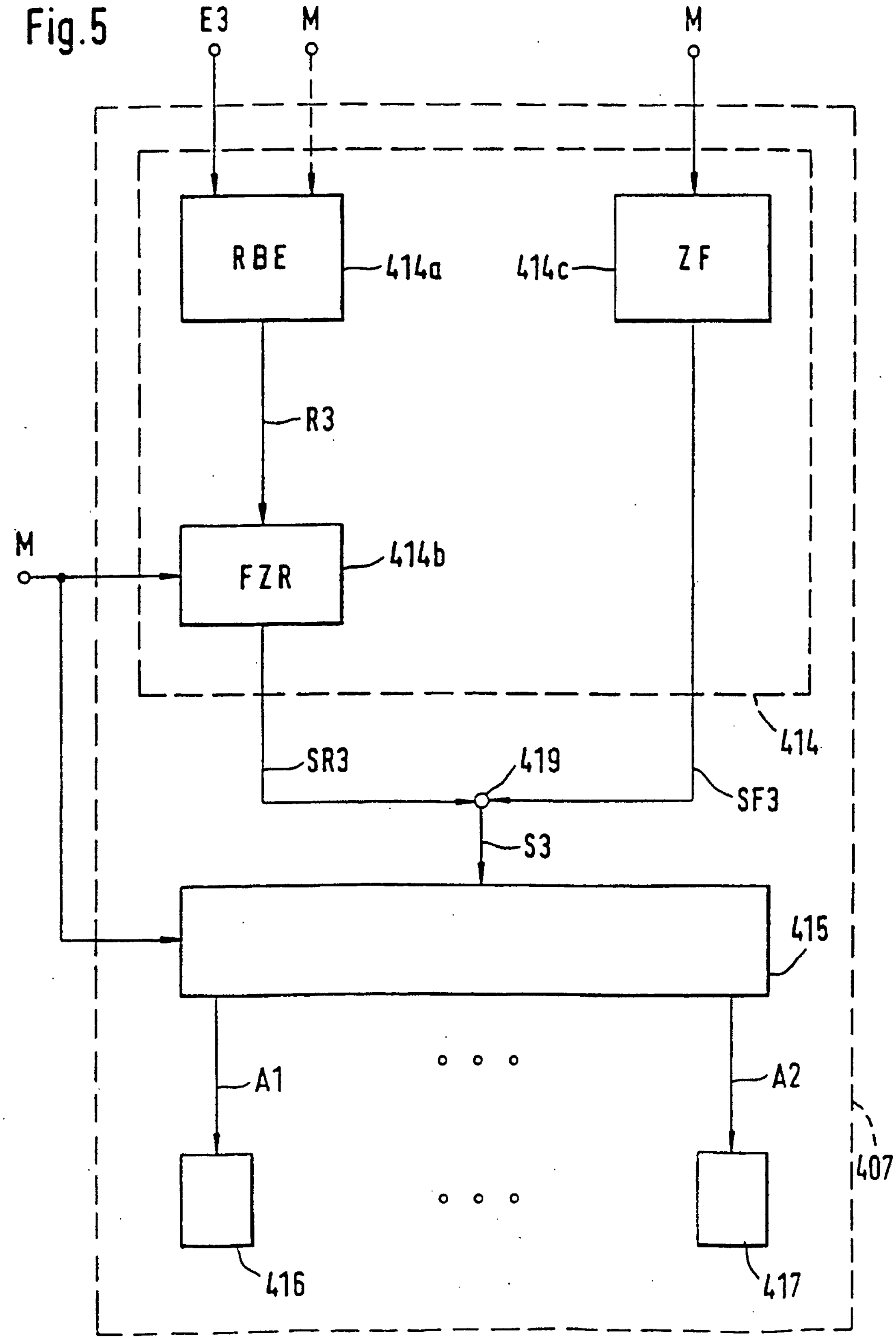
E3
M
M
RBE
414a
414c
ZF
R3
M
FZR
414b
414
SR3
419
SF3
S3
415
A1
A2
407
416
417